(19) Europäisches Patentamt
European Patent Office
Office européen des brevets

(11) **EP 4 439 734 A1**

(12) **EUROPEAN PATENT APPLICATION**

(43) Date of publication:
02.10.2024 Bulletin 2024/40

(21) Application number: 24164000.2

(22) Date of filing: 15.03.2024

(51) International Patent Classification (IPC):
H01M 4/62 $^{(2006.01)}$    H01M 4/134 $^{(2010.01)}$
H01M 4/38 $^{(2006.01)}$    H01M 10/0525 $^{(2010.01)}$
H01M 4/133 $^{(2010.01)}$   H01M 4/36 $^{(2006.01)}$
H01M 4/66 $^{(2006.01)}$    H01M 4/02 $^{(2006.01)}$

(52) Cooperative Patent Classification (CPC):
H01M 4/134; H01M 4/133; H01M 4/364;
H01M 4/38; H01M 4/386; H01M 4/622;
H01M 4/625; H01M 4/661; H01M 4/667;
H01M 10/0525; H01M 2004/021; H01M 2004/026

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 26.03.2023 KR 20230039377
31.03.2023 KR 20230042561

(71) Applicant: Samsung SDI Co., Ltd.
Yongin-si, Gyeonggi-do 17084 (KR)

(72) Inventors:
• LEE, Kukjoo
17084 Yongin-si (KR)
• CHO, Yunshik
17084 Yongin-si (KR)
• OH, Seunghyun
17084 Yongin-si (KR)
• CHO, Minho
17084 Yongin-si (KR)
• JUNG, Kyunghwa
17084 Yongin-si (KR)
• LEE, Jungmin
17084 Yongin-si (KR)

(74) Representative: Marks & Clerk LLP
15 Fetter Lane
London EC4A 1BW (GB)

(54) **NEGATIVE ELECTRODE AND LITHIUM BATTERY INCLUDING THE SAME**

(57) A negative electrode and a lithium battery including the same are provided. The negative electrode includes a negative electrode current collector, and a negative electrode active material layer provided on the negative electrode current collector. The negative electrode active material layer includes a negative electrode active material, a binder, and a carbon-based conductive material. The negative electrode active material includes a metal-based negative electrode active material, the binder includes an acrylic-based binder, and the carbon-based conductive material includes a fibrous carbon-based conductive material. The acrylic-based binder includes monomers having carboxyl, cyano, alkylene oxide, and/or sulfonic acid functionalities and at least a portion of the carboxyl groups are metal (e.g., lithium) carboxylate salts. Volume changes of the negative electrode material during charging/discharging may be suppressed or reduced and the capacity and lifespan characteristics of the lithium battery may be improved.

FIG. 1

**Description**

**BACKGROUND**

**1. Field**

One or more embodiments of the present disclosure relate to a negative electrode and a lithium battery including the same.

**2. Description of the Related Art**

Lithium batteries are utilized for one or more suitable purposes due to their high voltage and high energy density. For example, electric vehicles (hybrid electric vehicles (HEVs) and plug-in hybrid electric vehicles (PHEVs)) may utilize excessive electricity and even with such utilizations should still be useful for a relatively long time (e.g., should still have a relatively long lifespan).

In order to implement a lithium battery suitable for such uses, it is desired to provide (or there is need for) a lithium battery having increased discharge capacity and excellent or suitable lifespan characteristics.

**SUMMARY**

A carbon-based negative electrode active material is porous, has little change in volume during charging/discharging, and is electrochemically stable. The carbon-based negative electrode active material has a low unit energy density due to a porous structure of carbon. A metal-based negative electrode active material has higher energy density than the carbon-based negative electrode active material. The metal-based negative electrode active material is easily deteriorated due to a substantial (e.g., great) change in volume during charging/discharging. A negative electrode including the metal-based negative electrode active material may also be easily deteriorated due to an increased volume change during charging/discharging. As a result, the lifespan characteristics of a lithium battery including such a negative electrode are degraded.

One or more embodiments include a negative electrode which includes an acrylic-based binder and a fibrous carbon-based conductive material further including a metal-based negative electrode active material, whereby, during charging/discharging, a volume change may be reduced and deterioration may be suppressed or reduced.

One or more embodiments include a lithium battery having improved cycle characteristics by implementing (e.g., adopting) the negative electrode described herein.

Additional aspects will be set forth in part in the description which follows and, in part, will be apparent from the description, or may be learned by practice of the presented embodiments of the disclosure.

According to one or more embodiments, provided is a negative electrode including a negative electrode current collector and a negative electrode active material layer provided on the negative electrode current collector. In one or more embodiments, the negative electrode active material layer includes a negative electrode active material, a binder, and a carbon-based conductive material. In one or more embodiments, the negative electrode active material includes a metal-based negative electrode active material, the binder includes an acrylic-based binder, and/or the carbon-based conductive material includes a fibrous carbon-based conductive material having an aspect ratio of 10 or more. In one or more embodiments, the acrylic-based binder includes a first repeating unit derived from a carboxyl group-containing monomer, a second repeating unit derived from a cyano group-containing monomer, and a third repeating unit derived from an alkylene oxide group-containing monomer, a sulfonic acid group-containing monomer, or a combination thereof. In one or more embodiments, at least a portion of the first repeating unit includes a metal carboxylate salt (i.e., a carboxyl group in a form of a metal salt), and a weight ratio of the acrylic-based binder and the fibrous carbon-based conductive material is in a range of about 2:1 to about 40:1.

According to one or more embodiments, provided is a lithium metal battery including a positive electrode, the negative electrode described herein, and an electrolyte provided between the positive electrode and the negative electrode.

At least some of the above and other features of the invention are set out in the claims.

**BRIEF DESCRIPTION OF THE DRAWINGS**

The above and other aspects, features, and advantages of certain embodiments of the disclosure will be more apparent from the following description taken in conjunction with the accompanying drawings, in which:

FIG. 1 is a schematic view a lithium battery according to one or more embodiments of the present disclosure;

FIG. 2 is a schematic view of a lithium battery according to one or more embodiments of the present disclosure; and

FIG. 3 is a schematic view a lithium battery according to one or more embodiments of the present disclosure.

## DETAILED DESCRIPTION

Reference will now be made in more detail to embodiments of the present disclosure, examples of which are illustrated in the accompanying drawings, wherein like reference numerals refer to like elements throughout, and duplicative descriptions thereof may not be provided. In this regard, the present embodiments may be modified to have different forms and should not be construed as being limited to the descriptions set forth herein. Rather, the present disclosure is intended to cover all modifications, equivalents, and alternatives falling within the scope of the present disclosure. Accordingly, the embodiments are merely described, by referring to the drawings, to explain aspects of the present description.

As utilized herein, the term "and/or" includes any and all combinations of one or more of the associated listed items. Expressions such as "at least one of," if (e.g., when) preceding a list of elements, modify the entire list of elements and do not modify the individual elements of the list.

Various implementations are illustrated in the accompanying drawings. The present disclosure may, however, be embodied in different forms and should not be construed as limited to the embodiments set forth herein. Rather, these embodiments are provided so that the disclosure will be thorough and complete, and will fully convey the scope of the present disclosure to those skilled in the art. Like reference numerals designate like elements.

If (e.g., when) it is described that an element is "on," "connected to," or "coupled to" another element, it will be understood that the element may be provided directly on another element or still another element may be interposed therebetween. On the other hand, if (e.g., when) it is described that an element is "directly on" another element, still another element is not interposed therebetween.

It will be understood that, although the terms "first," "second," and "third" may be utilized herein to describe one or more suitable elements, components, regions, layers, and/or sections, these elements, components, regions, layers, and/or sections should not be limited by these terms. These terms are only utilized to distinguish one element, component, region, layer, or section from another region, layer, or section. Thus, a first element, component, region, layer, or section described may be termed a second element, component, region, layer, or section without departing from the teachings of the present specification.

The term utilized herein is intended to describe only a specific embodiment and is not intended to limit the present disclosure. As utilized herein, the singular forms "a," "an," and "the" are intended to include the plural forms, including "at least one," unless the content (e.g., amount) clearly indicates otherwise. As used herein, expressions such as "at least one," "one of," and "selected from," if (e.g., when) preceding a list of elements, should not be construed as being limited to the singular, but may modify the entire list of elements and do not modify the individual elements of the list. For example, the expressions "at least one of a to c," "at least one of a, b or c," and "at least one of a, b and/or c" may indicate only a, only b, only c, both (e.g., simultaneously) a and b, both (e.g., simultaneously) a and c, both (e.g., simultaneously) b and c, all of a, b, and c, or variations thereof.

As utilized herein, the term "and/or" includes any and all combinations of one or more of the associated listed items. The terms "include," "includes," "including," "comprise," "comprises," "comprising," "having," "has," and/or "have" if (e.g., when) utilized in the detailed description, specify a presence of stated features, regions, integers, steps, operations, elements, and/or components, but do not preclude the presence or addition of one or more other features, regions, integers, steps, operations, elements, components, and/or groups thereof.

Spatially relative terms such as "beneath," "below," "lower," "above," and "upper" may be utilized herein to easily describe one element or feature's relationship to another element or feature. It will be understood that the spatially relative terms are intended to encompass different orientations of a device in use or operation in addition to the orientation illustrated in the drawings. For example, if (e.g., when) a device in the drawings is turned over, elements described as "below" or "beneath" other elements or features would then be "above" or "over" the other elements or features. Thus, the example term "below" may encompass both (e.g., opposite) orientations of above and below. The device may be otherwise oriented (rotated 90 degrees or at other orientations), and the spatially relative terms utilized herein may be interpreted accordingly.

As used herein, the terms "use," "using," and "used" may be considered synonymous with the terms "utilize," "utilizing," and "utilized," respectively.

The term "may" will be understood to refer to "one or more embodiments of the present disclosure," some of which include the described element and some of which exclude that element and/or include an alternate element. Similarly, alternative language such as "or" refers to "one or more embodiments of the present disclosure," each including a corresponding listed item.

The term "combination(s) thereof" may include a mixture, a laminate, a complex, a copolymer, an alloy, a blend, a reactant of constituents, and/or the like.

Unless otherwise defined, all terms (including chemical, technical and scientific terms) utilized herein have the same meaning as commonly understood by one of ordinary skill in the art to which the present disclosure belongs. In some embodiments, it will be further understood that terms, such as those defined in commonly utilized dictionaries, should be interpreted as having a meaning that is consistent with their meaning in the context of the relevant art and the present disclosure, and will not be interpreted in an idealized or overly formal sense unless expressly so defined herein.

In this context, "consisting essentially of" means that any additional components will not materially affect the chemical, physical, optical or electrical properties of the semiconductor film.

Further, in this specification, the phrase "on a plane," or "plan view," means viewing a target portion from the top, and the phrase "on a cross-section" means viewing a cross-section formed by vertically cutting a target portion from the side.

Embodiments are described herein with reference to cross-sectional views which are schematic diagrams of embodiments. As such, variations from the shapes of the illustrations as a result, for example, of manufacturing techniques and/or tolerances, are to be expected. Thus, the embodiments described herein should not be construed as limited to the particular shapes regions of illustrated herein but may include deviations in shapes that result, for example, from manufacturing. For example, regions illustrated or described as being flat may be typically rough and/or have nonlinear features. Moreover, sharp-drawn angles may be round. Thus, regions illustrated in the drawings are schematic in nature and their shapes are not intended to illustrate the actual shape of a region and are not intended to limit the scope of the claims.

**Definitions**

As utilized herein, the term "particle diameter" of particles refers to an average diameter if (e.g., when) particles are spherical and refers to an average major axis length if (e.g., when) particles are non-spherical. A particle diameter of particles may be measured utilizing a particle size analyzer (PSA). A "particle diameter" of particles is, for example, an "average particle diameter." An average particle diameter refers to, for example, a median particle diameter (D50). The median particle diameter (D50) is a particle size corresponding to a 50% cumulative volume if (e.g., when) a particle size distribution measured through a laser diffraction method is calculated from particles having a smaller particle size. In some embodiments, a "particle diameter" or an "average particle diameter" may be measured from a transmission electron microscope (TEM) image, a scanning electron microscope (SEM) image, and/or the like.

D50 refers to a particle size corresponding to a 50% cumulative volume if (e.g., when) a particle size distribution measured through a laser diffraction method is calculated from particles having a smaller particle size.

D90 refers to a particle size corresponding to a 90% cumulative volume if (e.g., when) a particle size distribution measured through a laser diffraction method is calculated from particles having a smaller particle size.

D10 refers to a particle size corresponding to a 10% cumulative volume if (e.g., when) a particle size distribution measured through a laser diffraction method is calculated from particles having a smaller particle size.

In the disclosure, "Group" refers to a group of the periodic table of the elements according to the International Union of Pure and Applied Chemistry ("IUPAC") Groups 1-18 group classification system.

The term "metal" as utilized herein includes all of metals and metalloids such as silicon and germanium in an elemental or ionic state.

The term "electrode active material" as utilized herein refers to an electrode material that may undergo lithiation and delithiation.

The term "negative electrode active material" as utilized herein refers to a negative electrode material that may undergo lithiation and delithiation.

The terms "lithiate" and "lithiating" as utilized herein refer to a process of adding lithium to an electrode active material.

The terms "delithiate" and "delithiating" as utilized herein refer to a process of removing lithium from an electrode active material.

The terms "charge" and "charging" as utilized herein refer to a process of providing electrochemical energy to a battery.

The terms "discharge" and "discharging" as utilized herein refer to a process of removing electrochemical energy from a battery.

The terms "positive electrode" and "cathode" as utilized herein refer to an electrode at which electrochemical reduction and lithiation occur during a discharging process.

The terms "negative electrode" and "anode" as utilized herein refer to an electrode at which electrochemical oxidation and delithiation occur during a discharging process.

While specific embodiments have been described, alternatives, modifications, variations, improvements, and substantial equivalents that are or may be presently unforeseen may arise to applicants or others skilled in the art. Accordingly, the appended claims as filed and as they may be amended are intended to embrace all such alternatives, modifications, variations, improvements, and substantial equivalents.

As utilized herein, if (e.g., when) a definition is not otherwise provided, "substituted" refers to replacement of hydrogen of a compound by a substituent selected from among a deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, and/or combinations thereof.

Hereinafter, a negative electrode and a lithium battery including the same according to embodiments will be described in more detail.

## Negative Electrode

A negative electrode according to one or more embodiments includes a negative electrode current collector, and a negative electrode active material layer provided on the negative electrode current collector, wherein the negative electrode active material layer includes a negative electrode active material, a binder, and a carbon-based conductive material, the negative electrode active material includes a metal-based negative electrode active material, the binder includes an acrylic-based binder, the carbon-based conductive material includes a fibrous carbon-based conductive material having an aspect ratio of 10 or more, the acrylic-based binder includes a first repeating unit derived from a carboxyl group-containing monomer, a second repeating unit derived from a cyano group-containing monomer, and a third repeating unit derived from an alkylene oxide group-containing monomer, a sulfonic acid group-containing monomer, or a combination thereof, at least a portion of the first repeating unit includes a metal carboxylate salt (i.e., a carboxyl group in the form of a metal salt), and a weight ratio of the acrylic-based binder and the fibrous carbon-based conductive material is in a range of about 2:1 to about 40:1.

Because the negative electrode includes the acrylic-based binder, and the acrylic-based binder includes the described first repeating unit, second repeating unit, and third repeating unit, a binding force between the negative electrode active material layer and the negative electrode current collector may be improved, and a volume change of the negative electrode may be suppressed or reduced during charging/discharging. Because the negative electrode includes the acrylic-based binder, a decrease in capacity during charging/discharging of a lithium battery including the negative electrode may be suppressed or reduced. Because the negative electrode includes the acrylic-based binder and the fibrous carbon-based material simultaneously (e.g., at the same time), an increase in volume change of the negative electrode caused by the fibrous carbon-based material may be suppressed or reduced by the acrylic-based binder. In the negative electrode including the acrylic-based binder and the fibrous carbon-based conductive agent, an increase in internal resistance of the negative electrode may be suppressed or reduced, and a volume change of the negative electrode may be suppressed or reduced. A lithium battery including such a negative electrode may have improved cycle characteristics without a decrease in capacity. In contrast, in a comparable negative electrode (e.g., according to a related art) including a metal-based negative electrode active material and not including an acrylic-based binder, a volume change may be increased during charging/discharging, due to cracks in a negative electrode active material layer and/or delamination between the negative electrode active material layer and a negative electrode current collector, and thus capacity of a lithium battery may be considerably decreased during charging/discharging. In some embodiments, a comparable negative electrode (e.g., according to a related art) including a metal-based negative electrode active material and a fibrous carbon-based conductive material and not including an acrylic-based binder, a volume change may be further increased during charging/discharging, and thus capacity of the lithium battery including such a negative electrode may be more considerably decreased.

The fibrous carbon-based conductive material has an aspect ratio of 10 or more, for example, may have an aspect ratio of 20 or more, 50 or more, or 100 or more. The fibrous carbon-based conductive material may have, for example, an aspect ratio of about 10 to about 10,000, about 20 to about 5,000, about 50 to about 3,000, about 50 to about 2,000, or about 100 to about 1,000. The aspect ratio of the fibrous carbon-based material may be, for example, a ratio of a length of a major axis passing through a center of the fibrous carbon-based material, that is, e.g., a length of the fibrous carbon-based material, and a length of a minor axis passing through the center of the fibrous carbon-based material and perpendicular to the major axis, that is, e.g., a diameter of the fibrous carbon-based material. Because the fibrous carbon-based conductive material has an aspect ratio in such a range, an increase in internal resistance in the negative electrode may be more effectively suppressed or reduced, and the cycle characteristics of a lithium battery including such a negative electrode may be further improved. As utilized herein, an "aspect ratio" of fibrous carbon-based material may be measured by a SEM and the "aspect ratio" of fibrous carbon-based material may be an average aspect ratio of at least one fibrous carbon-based material read on a SEM image.

At least a portion of the first repeating unit derived from the carboxyl group-containing monomer includes the metal carboxylate salt (i.e., carboxyl group in the form of a metal salt). The metal carboxylate salt (i.e., carboxyl group in the form of a metal salt) may refer to a carboxyl group in which a terminal hydrogen is substituted with a metal ion.

For example, the metal carboxylate salt (i.e., carboxyl group in the form of a metal salt) may have a form of "-C(=O)OM (wherein M is a metal)." Because the first repeating unit includes the metal carboxylate salt (i.e., carboxyl group in the form of a metal salt), the water dispersibility of the acrylic-based binder may be further improved, and the internal resistance of the negative electrode including the acrylic-based binder may be further reduced.

A weight ratio of the acrylic-based binder and the fibrous carbon-based conductive material included in the negative electrode active material layer may be, for example, in a range of about 3:1 to about 40:1, about 5:1 to about 40:1, about 10:1 to about 40:1, about 10:1 to about 30:1, or about 10:1 to about 20:1. In the negative electrode including the acrylic-based binder and the fibrous carbon-based conductive material, because the acrylic-based binder and the fibrous carbon-based conductive material may satisfy the described weight ratio, a volume change of the negative electrode may be more effectively suppressed or reduced during charging/discharging, and the cycle characteristics of a lithium battery including such a negative electrode may be further improved. If (e.g., when) a content (e.g., amount) of the fibrous carbon-based conductive material is excessively low, an effect of improving conductivity and/or reducing internal resistance due to the fibrous carbon-based conductive material may be insignificant. In the negative electrode including the acrylic-based binder and the fibrous carbon-based conductive material, if (e.g., when) the content (e.g., amount) of the fibrous carbon-based conductive material is excessively increased, the fibrous carbon-based conductive material may be non-uniformly distributed in the negative electrode active material layer due to aggregation of the fibrous carbon-based conductive material, and thus the cycle characteristics of a lithium battery may be degraded due to local side reactions.

The fibrous carbon-based conductive material may include, for example, carbon nanotubes.

The carbon nanotubes may include, for example, single-walled carbon nanotubes, double-walled carbon nanotubes, multi-walled carbon nanotubes, or a combination thereof. In particular, the carbon nanotubes may include the single-walled carbon nanotubes and/or the double-walled carbon nanotubes. In a negative electrode active material slurry including single-walled carbon nanotubes and/or double-walled carbon nanotubes, the dispersibility of carbon nanotubes may be further improved, and thus the internal resistance of a negative electrode prepared therefrom may be more effectively reduced.

The carbon nanotubes may have, for example, an average length of about 40 $\mu$m to about 250 $\mu$m, about 40 $\mu$m to about 200 $\mu$m, about 40 $\mu$m to about 150 $\mu$m, or about 40 $\mu$m to about 100 $\mu$m. As the average length of the carbon nanotubes increases, the internal resistance of the negative electrode may further decrease. If (e.g., when) the average length of the carbon nanotubes is excessively short, an effect of reducing internal resistance may be insignificant, and an effective conducting path may be difficult to provide.

The carbon nanotubes may have, for example, an average diameter of about 1 nm to about 100 nm, about 5 nm to about 100 nm, about 5 nm to about 80 nm, about 5 nm to 60 nm, about 5 nm to about 40 nm, or about 5 nm to about 20 nm. If (e.g., when) the average diameter of the carbon nanotubes is excessively large, an effect of reducing the internal resistance of the negative electrode may be insignificant due to a decrease in the number of carbon nanotubes per unit volume. If (e.g., when) the average diameter of the carbon nanotubes is excessively small, substantially uniform dispersion may not occur (e.g., may be difficult).

A bulk density of the carbon nanotubes may be, for example, 0.1 gram per cubic centimeter ($g/cm^3$) or less. The bulk density of the carbon nanotubes may be, for example, in a range of about 0.001 $g/cm^3$ to about 0.1 $g/cm^3$ or about 0.01 $g/cm^3$ to about 0.1 $g/cm^3$. Because the carbon nanotubes may have a bulk density in such a range, the internal resistance of the negative electrode including the carbon nanotubes may be more effectively reduced, and the cycle characteristics of a lithium battery including such a negative electrode may be further improved.

A Raman peak intensity ratio $I_D/I_G$ of the carbon nanotubes may be, for example, in a range of about 0.8 to about 1.3 or about 0.9 to about 1.1. The Raman peak intensity ratio $I_D/I_G$ may refer to a peak intensity ratio $I_D/I_G$ of a D-band peak intensity $I_D$ near 1,350 inverse centimeter ($cm^{-1}$) to a G-band peak intensity $I_G$ near 1,580 $cm^{-1}$ in a Raman spectrum. Because the carbon nanotubes may have a Raman peak intensity ratio $I_D/I_G$ in such a range, the internal resistance of the negative electrode including the carbon nanotubes may be more effectively reduced, and the cycle characteristics of a lithium battery including the negative electrode may be further improved.

The negative electrode includes the acrylic-based binder and the fibrous carbon-based conductive material, and the content (e.g., amount) of the fibrous carbon-based conductive material may be in a range of about 0.01 wt% to about 1.0 wt%, about 0.01 wt% to about 0.5 wt%, about 0.02 wt% to about 0.4 wt%, about 0.02 wt% to about 0.3 wt%, or about 0.05 wt% to about 0.2 wt% with respect to (e.g., of) the total weight of the negative electrode active material, the binder, and the carbon-based conductive material. Because the negative electrode may include the fibrous carbon-based conductive material in such a range, a volume change of the negative electrode may be more effectively suppressed or reduced during charging and discharging, and the cycle characteristics of a lithium battery including the negative electrode may be further improved. If (e.g., when) the content (e.g., amount) of the fibrous carbon-based conductive material is excessively low, an effect on the cycle characteristics of a lithium battery may be insignificant. If (e.g., when) the content (e.g., amount) of the fibrous carbon-based conductive material is excessively high, the dispersibility of the fibrous carbon-based conductive material may be decreased, and thus substantially uniform distribution of the fibrous carbon-based conductive material in the negative electrode may be difficult. As a result, the deterioration of a lithium battery may be accelerated due to side reactions caused by a local overcurrent and/or the like in the negative electrode during charging/discharging. A loading level of the negative electrode active material layer may be, for example, in a range of about 1 milligram per square centimeter (mg/cm$^2$) to about 30 mg/cm$^2$, about 5 mg/cm$^2$ to about 30 mg/cm$^2$, or about 10 mg/cm$^2$ to about 30 mg/cm$^2$.

The negative electrode includes the negative electrode active material layer, the loading level of the negative electrode active material layer may be, for example, in a range of about 10 to about 30 mg/cm$^2$, and the content (e.g., amount) of the fibrous carbon-based conductive material included in the negative electrode active material layer may be, for example, in a range of about 0.01 wt% to about 0.3 wt%, about 0.01 wt% to about 0.2 wt%, or about 0.05 wt% to about 0.2 wt% with respect to (e.g., of) the total weight of the negative electrode active material, the binder, and the carbon-based conductive material. Because the negative electrode may have a loading level in such a range and may include the fibrous carbon-based conductive material in a content (e.g., amount) in such a range, a volume change of the negative electrode may be more effectively suppressed or reduced during charging/discharging, and the cycle characteristics of a lithium battery may be further improved.

The negative electrode includes a carbon-based conductive material, and the carbon-based conductive material may further include a particulate carbon-based conductive material having an aspect ratio of 5 or less in addition to the fibrous carbon-based conductive material. Because the negative electrode may further include the particulate carbon-based conductive material having an aspect ratio of 5 or less, the internal resistance of the negative electrode may be more effectively reduced. As utilized herein, an "aspect ratio" of particulate carbon-based conductive material may be measured by a SEM and the "aspect ratio" of particulate carbon-based conductive material may be an average aspect ratio of at least one fibrous carbon-based material read on a SEM image. An average particle diameter of the particulate carbon-based conductive material may be, for example, in a range of 200 nm or less, 100 nm or less, or 50 nm or less. The average particle diameter of the particulate carbon-based conductive material may be, for example, in a range of about 5 nm to about 200 nm, about 10 nm to about 100 nm, or about 10 nm to about 50 nm. If (e.g., when) the average particle diameter of the particulate carbon-based conductive material is excessively small, it may be difficult to suppress or reduce aggregation of the particulate carbon-based conductive material. If (e.g., when) the particle size of the particulate carbon-based conductive material is excessively increased, it may be difficult to reduce the internal resistance of the negative electrode. A mixing weight ratio of the fibrous carbon-based conductive material and the particulate carbon-based conductive material may be, for example, in a range of about 10:1 to about 1:10, about 4:1 to about 1:4, or about 3:1 to about 1:3. If (e.g., when) the fibrous carbon-based conductive material and the particulate carbon-based conductive material have a weight ratio in such a range, the internal resistance of the negative electrode may be more effectively reduced, and the cycle characteristics of a lithium battery may be more effectively improved.

The negative electrode may additionally include other conductive materials according to a related art in addition to the above-described fibrous carbon-based conductive material and particulate carbon-based conductive material. Such a conductive material may include, for example, a carbon-based conductive material such as carbon black, Ketjen black, acetylene black, or a carbon fiber, a metal-based conductive material such as a metal powder of copper, nickel, aluminium, silver, or a metal fiber, a polymer conductive material such as a polyphenylene derivative, or a combination thereof. The conductive material is not limited thereto, and any material usable as a conductive material in the art may be utilized.

The acrylic-based binder includes the first repeating unit derived from the carboxyl group-containing monomer.

In the first repeating unit including a carboxyl group, a content (e.g., amount) of a repeating unit including a metal carboxylate salt (i.e., carboxyl group in the form of a metal salt) may be in a range of about 30 mol% to about 80 mol%, about 40 mol% to about 80 mol%, about 45 mol% to about 75 mol%, or about 50 mol% to about 70 mol%. Because the acrylic-based binder may include the first repeating unit including the metal carboxylate salt (i.e., carboxyl group in the form of a metal salt) in such a range, the dispersibility of the acrylic-based binder may be further improved, and the internal resistance of the negative electrode including the acrylic-based binder may be more effectively reduced. In the metal carboxylate salt (i.e., carboxyl group in the form of a metal salt), the metal salt may be, for example, an alkali metal salt. In the metal carboxylate salt (i.e., carboxyl group in the form of a metal salt), the metal salt may be, for example, a lithium salt, a sodium salt, a potassium salt, a rubidium salt, a cesium salt, or a combination thereof. The metal salt may be particularly a lithium salt. The lithium carboxylate salt (i.e., carboxyl group in the form of a lithium salt) may be represented by, for example, "-C(=O)OLi." The repeating unit including the metal carboxylate salt (i.e., carboxyl group in the form of a metal salt) may be introduced into the acrylic-based binder by reacting a basic metal salt with a copolymerized product after copolymerization or may be introduced into the acrylic-based binder by copolymerizing a monomer including a metal carboxylate salt (i.e., carboxyl group in the form of a metal salt).

The carboxyl group-containing monomer may include, for example, an unsaturated carboxylic acid. The unsaturated carboxylic acid may include an unsaturated group having a double bond and/or the like in a molecule and may be a compound having a carboxyl group. The unsaturated carboxylic acid may include, for example, a monocarboxylic acid, a dicarboxylic acid, a dicarboxylic acid anhydride, or a combination thereof. The unsaturated carboxylic acid may include, for example, an acrylic acid (AA), a methacrylic acid, a crotonic acid, a maleic acid, a fumaric acid, an itaconic acid, or combination thereof. The carboxyl group-containing monomer may be particularly an AA or a methacrylic acid. The carboxyl group-containing monomer in the form of a metal salt may be, for example, a lithium acrylate or a lithium methacrylate.

In all repeating units included in the acrylic-based binder, a content (e.g., amount) of the first repeating unit derived from the carboxyl group-containing monomer may be, for example, in a range of about 40 mol% to about 60 mol%, about 40 mol% to about 55 mol%, or about mol% 40 to about 50 mol%. If (e.g., when) the acrylic-based binder includes the first repeating unit derived from the carboxyl group-containing monomer in such a range, the acrylic-based binder may provide excellent or suitable water dispersibility and improved adhesive strength simultaneously (e.g., at the same time). Therefore, a negative electrode active material slurry including the acrylic-based binder may be more easily prepared. In some embodiments, the acrylic-based binder may provide excellent or suitable adhesive strength for the metal-based negative electrode active material and/or the negative electrode current collector, may effectively suppress or reduce a volume change of the metal-based negative electrode active material, and may improve the cycle characteristics of a lithium battery including such a negative electrode.

The acrylic-based binder includes the second repeating unit derived from the cyano group-containing monomer.

The cyano group-containing monomer may include, for example, an unsaturated nitrile compound. The unsaturated nitrile compound may include an unsaturated group having a double bond and/or the like in a molecule and may be a compound having a nitrile group. The unsaturated nitrile compound may include, for example, at least one selected from among acrylonitrile (AN), methacrylonitrile, chloroacrylonitrile, ethylacrylonitrile, vinylidene cyanide, or a combination thereof. The cyano group-containing monomer may be particularly acrylonitrile (AN).

In all repeating units included in the acrylic-based binder, a content (e.g., amount) of the second repeating unit derived from the cyano group-containing monomer may be, for example, in a range of about 40 mol% to about 70 mol%, about 40 mol% to about 65 mol%, about 45 mol% to about 65 mol%, about 45 mol% to about 60 mol%, or about 50 mol% to about 60 mol%. Because the acrylic-based binder may include the second repeating unit in such a range, the acrylic-based binder may provide an excellent or suitable binding force and improved heat resistance at the same time. Accordingly, a volume change of the negative electrode including the acrylic-based binder may be suppressed or reduced during charging/discharging, the heat resistance of the negative electrode may be improved, and the high-temperature cycle characteristics of a lithium battery including such a negative electrode may be further improved.

The acrylic-based binder includes the third repeating unit derived from the alkylene oxide group-containing monomer, the sulfonic acid group-containing monomer, or a combination thereof.

The alkylene oxide group-containing monomer may include, for example, an unsaturated carboxylic acid ester including 1 to 20 alkylene oxide repeating units. The alkylene oxide group-containing monomer may include, for example, 2 to 20, 2 to 15, 2 to 10, or 2 to 5 alkylene oxide repeating units. The alkylene oxide repeating units may include, for example, a methylene oxide repeating unit, an ethylene oxide repeating unit, a propylene oxide repeating unit, or a combination thereof. The alkylene oxide repeating unit may be particularly an ethylene oxide repeating unit. The methylene oxide repeating unit may be represented by, for example, $-(CH_2O)_{n1-}$ (wherein n1 is in a range of 1 to 20). The ethylene oxide repeating unit may be represented, for example, by $-(CH_2CH_2O)_{n2-}$ (wherein n2 is in a range of 1 to 20). The propylene oxide repeating unit may be represented by, for example, $-(CH_2CH_2CH_2O)_{n3-}$ or $-(CH(CH_3)CH_2O)_{n4-}$ (wherein n3 and n4 are each independently in a range of 1 to 20). A terminal functional group connected to a terminal of the alkylene oxide repeating unit may be, for example, a substituted or unsubstituted C1-C6 alkyl group. The terminal functional group may include, for example, a methyl group, an ethyl group, or a combination thereof. The unsaturated carboxylic acid ester including 1 to 20 alkylene oxide repeating units may include, for example, polyethylene glycol methyl ether acrylate, polyethylene glycol methyl ether methacrylate, polyethylene glycol ethyl ether acrylate, polyethylene glycol ethyl ether methacrylate, or a combination thereof.

A weight average molecular weight of the alkylene oxide group-containing monomer may be, for example, in a range of about 200 Dalton to about 950 Dalton, about 200 Dalton to about 900 Dalton, about 200 Dalton to about 800 Dalton, about 200 Dalton to about 700 Dalton, or about 200 Dalton to about 600 Dalton. The weight average molecular weight of the alkylene oxide group-containing monomer may be a relative value with respect to, for example, a polystyrene standard sample and may be measured utilizing gel permeation chromatography (GPC), liquid chromatography-mass spectrometry (LC-MS) and/or gas chromatography- mass spectrometry (GC-MS). Because the alkylene oxide group-containing monomer may have a weight average molecular weight in such a range, improved lithium ion conductivity and structural stability may be provided at the same time. If (e.g., when) the weight average molecular weight of the alkylene oxide group-containing monomer is excessively low, lithium ion conductivity may be lowered, thereby increasing the internal resistance of the negative electrode including the acrylic-based binder and degrading the cycle characteristics of a lithium battery. If (e.g., when) the weight average molecular weight of the alkylene oxide group-containing monomer is excessively increased, the alkylene oxide group may be decomposed due to side reactions during charging/discharging so that the acrylic-based binder may be easily deteriorated. As a result, the internal resistance of the negative electrode may increase, and the cycle characteristics of a lithium battery may degrade.

The sulfonic acid group-containing monomer may include, for example, an unsaturated sulfonic acid compound. The unsaturated sulfonic acid compound may include, for example, a compound including an acrylic or methacrylic group, a sulfonic acid group, and an amide group. The unsaturated sulfonic acid compound may include, for example, an acrylamidoalkylalkanesulfonic acid, a methacrylamidoalkylalkanesulfonic acid, or combination thereof. The sulfonic acid group-containing monomer may include, for example, 2-acrylamido-2-methylpropanesulfonic acid, 2-methacrylamido-2-methylpropanesulfonic acid, 2-acrylamido-2-ethylpropanesulfonic acid, 2-methacrylamido-2-ethylpropanesulfonic acid, 2-acrylamido-2-methylbutanesulfonic acid, 2-methacrylamido-2-methylbutanesulfonic acid, 2-acrylamido-2-ethylbutanesulfonic acid, 2-methacrylamido-2-ethylbutanesulfonic acid, or a combination thereof.

The acrylic-based binder may include the third repeating unit derived from the sulfonic acid group-containing monomer and may or may not include (e.g., may exclude) a repeating unit including a sulfonic acid group in the form of a metal salt in the third repeating unit. In the third repeating unit, a content (e.g., amount) of the repeating unit containing the sulfonic acid group in the form of a metal salt may be in a range of 0 mol% to about 100 mol%, about mol% 50 to about 100 mol%, about 80 mol% to about 100 mol%, about 90 mol% to about 100 mol%, or about 95 mol% to about 100 mol%. Because the acrylic-based binder may include the third repeating unit including the sulfonic acid group in the form of a metal salt, the dispersibility of the acrylic-based binder may be further improved, and the internal resistance of the negative electrode including the acrylic-based binder may be more effectively reduced. In the sulfonic acid group in the form of a metal salt, the metal salt may be, for example, an alkali metal salt. In the sulfonic acid group in the form of a metal salt, the metal salt may be, for example, a lithium salt, a sodium salt, a potassium salt, a rubidium salt, a cesium salt, or a combination thereof. The metal salt may be a lithium salt. The sulfonic acid group in the form of a lithium salt may be represented by, for example, "$-S(=O)_2OLi$." The repeating unit including the sulfonic acid group in the form of a metal salt may be introduced into the acrylic-based binder by reacting a basic metal salt with a copolymerized product after copolymerization or may be introduced into the acrylic-based binder by copolymerizing a monomer including a sulfonic acid group in the form of a metal salt.

The monomer including the sulfonic acid group in the form of a metal salt may include, for example, at least one selected from among a metal salt of 2-acrylamido-2-methylpropanesulfonic acid, a metal salt of 2-methacrylamido-2-methylpropanesulfonic acid, a metal salt of 2-acrylamido-2-ethylpropanesulfonic acid, a metal salt of 2-methacrylamido-2-ethylpropanesulfonic acid, a metal salt of 2-acrylamido-2-methylbutanesulfonic acid, a metal salt of 2-methacrylamido-2-methylbutanesulfonic acid, a metal salt of 2-acrylamido-2-ethylbutanesulfonic acid, and a metal salt of 2-methacrylamido-2-ethylbutanesulfonic acid. A sulfonic acid group metal salt-containing monomer may be particularly a metal salt of 2-acrylamido-2-methylpropanesulfonic acid or a metal salt of 2-methacrylamido-2-methylpropanesulfonic acid.

In all repeating units included in the acrylic-based binder, a content (e.g., amount) of the third repeating unit derived from the alkylene oxide group-containing monomer, the sulfonic acid group-containing monomer, or the combination thereof may be, for example, in a range of about 1 mol% to about 10 mol%, about 1 mol% to about 8 mol%, or about 1 mol% to about 6 mol%. Because the acrylic-based binder may include the third repeating unit in such a range, the acrylic-based binder may provide an excellent or suitable binding force and improved lithium ion conductivity at the same time. Accordingly, a volume change of the negative electrode including the acrylic-based binder may be suppressed or reduced during charging/discharging, an increase in internal resistance of the negative electrode may be suppressed or reduced, and the cycle characteristics of a lithium battery including such a negative electrode may be further improved.

In all repeating units included in the acrylic-based binder, for example, the content (e.g., amount) of the first repeating unit derived from the carboxyl group-containing monomer may be in a range of about 40 mol% to about 60 mol%, the content (e.g., amount) of the second repeating unit derived from the cyano group-containing monomer may be in a range of about 40 mol% to about 60 mol%, and the content (e.g., amount) of the third repeating unit derived from the alkylene oxide group-containing monomer, the sulfonic acid group-containing monomer, or the combination thereof may be in a range of about 1 mol% to about 10 mol%. In all repeating units included in the acrylic-based binder, for example, the content (e.g., amount) of the first repeating unit derived from the carboxyl group-containing monomer may be in a range of about 43 mol% to about 52 mol%, the content (e.g., amount) of the second repeating unit derived from the cyano group-containing monomer may be in a range of about 47 mol% to about 56 mol%, and the content (e.g., amount) of the third repeating unit derived from the alkylene oxide group-containing monomer, the sulfonic acid group-containing monomer, or the combination thereof may be in a range of about 1 mol% to about 10 mol%. Because the first to third repeating units included in the acrylic-based binder may have a composition ratio in such a range, a volume change of the negative electrode including the acrylic-based binder may be more effectively suppressed or reduced during charging/discharging, and the cycle characteristics of a lithium battery may be further improved.

A weight average molecular weight of the acrylic-based binder may be, for example, in a range of 100,000 Dalton to about 5,000,000 Dalton, about 100,000 Dalton to about 3,000,000 Dalton, about 100,000 Dalton to about 2,000,000 Dalton, or about 100,000 Dalton to about 1,000,000 Dalton. Because the acrylic-based binder may have a weight average molecular weight in such a range, a volume change of the negative electrode may be more effectively suppressed or reduced during charging/discharging, and the cycle characteristics of a lithium battery may be further improved. If (e.g., when) the weight average molecular weight of the acrylic-based binder is too low, it may be difficult to effectively suppress or reduce a volume change of the negative electrode during charging/discharging, and if (e.g., when) the weight average molecular weight of the acrylic-based binder is excessively high, it may be difficult to dissolve the acrylic-based binder in a solvent, which may make it difficult to prepare a negative electrode active material slurry having excellent or suitable dispersibility. The weight average molecular weight of the acrylic-based binder may be a relative value with respect to, for example, a polystyrene standard sample and may be measured utilizing gel permeation chromatography (GPC).

In some embodiments, a viscosity of a 5.5 wt% aqueous solution of the acrylic-based binder at a temperature of about 25 °C and a pressure of about 1 atm may be, for example, in a range of about 1,500 centipoise to about 4,500 centipoise, about 2,000 to about 4,000 centipoise, or about 2,000 centipoise to about 3,000 centipoise. Because the acrylic-based binder may have a viscosity in such a range, a volume change of the negative electrode may be more effectively suppressed or reduced during charging/discharging, and the cycle characteristics of a lithium battery may be further improved.

A content (e.g., amount) of the acrylic-based binder included in the negative electrode active material layer may be, for example, in a range of about 0.1 wt% to about 5 wt%, about 0.1 wt% to about 4 wt%, about 0.2 wt% to about 3 wt%, or about 0.2 wt% to about 2 wt% with respect to the total weight of the negative electrode active material, the binder, and the carbon-based conductive material. Because the negative electrode active material layer may have a content (e.g., amount) of the acrylic-based binder in such a range, while a volume change of the negative electrode active material is effectively suppressed or reduced, the cycle characteristics of a lithium battery may be improved. If (e.g., when) the content (e.g., amount) of the acrylic-based binder is excessively low, an effect on the cycle characteristics of a lithium battery may be insignificant. If (e.g., when) the content (e.g., amount) of the acrylic-based binder is excessively high, the energy density of a lithium battery may be lowered.

The binder may additionally include, for example, a non-acrylic-based binder according to a related art in addition to the acrylic-based binder. The non-acrylic-based binder may include, for example, polyvinylidene fluoride (PVDF), polyvinylidene chloride, polybenzimidazole, polyimide (PI), polyvinyl acetate, polyvinyl alcohol, carboxymethylcellulose (CMC), starch, hydroxypropylcellulose, regenerated cellulose, polyvinylpyrrolidone, tetrafluoroethylene, polyethylene (PE), polypropylene, polystyrene, polyaniline, acrylonitrilebutadiene styrene, a phenolic resin, an epoxy resin, polyethylene terephthalate (PET), polytetrafluoroethylene, polyphenyl sulfide, polyamideimide, polyetherimide, polyethylenesulfone, polyamide, polyacetal, polyphenylene oxide, polybutylene terephthalate (PBT), ethylene-propylene-diene monomer (EPDM) rubber, sulfonated EPDM, styrene butadiene rubber (SBR), fluoro rubber, or a combination thereof. The non-acrylic-based binder is not limited thereto, and any non-acrylic-based binder utilized as a negative electrode binder in the art may be utilized. Because the binder may include the acrylic-based binder and the non-acrylic-based binder at the same time, the dispersion stability of a negative electrode active material slurry may be further improved.

The binder may include, for example, the acrylic-based binder and the non-acrylic-based binder and may include about 10 parts by weight to about 50 parts by weight, about 10 parts by weight to about 40 parts by weight, or about 20 parts by weight to about 40 parts by weight of the acrylic-based binder with respect to about 100 parts by weight of the non-acrylic-based binder. If (e.g., when) the content (e.g., amount) of the acrylic-based binder is too excessively low, it may be difficult to effectively suppress or reduce a volume change of the negative electrode by the acrylic-based binder during charging/discharging. If (e.g., when) the content (e.g., amount) of the acrylic-based binder is excessively high, the dispersion stability of a negative electrode active material slurry may be relatively lowered.

The negative electrode active material includes a metal-based negative electrode active material. The metal-based negative electrode active material may be, for example, a silicon-based negative electrode active material. The metal-based negative electrode active material may include, for example, silicon, a silicon alloy, silicon oxide, silicon nitride, silicon oxynitride, silicon carbide, a silicon-carbon composite, or a combination thereof. The silicon-carbon composite may include, for example, a composite of silicon nanoparticles, carbon nanoparticles, or a combination thereof. The silicon-carbon composite may include, for example, a composite of silicon nanoparticles, a composite of carbon nanoparticles, or a composite of silicon nanoparticles and carbon nanoparticles. The metal-based negative electrode active material may be, for example, silicon oxide ($SiO_x$) (wherein 0<x<2). The silicon-carbon composite may be, for example, carbon-coated silicon nanoparticles. An average particle diameter of the silicon-carbon composite may be, for example, in a range of about 5 $\mu$m to about 20 $\mu$m. An average particle diameter of the silicon nanoparticles may be, for example, in a range of 200 nm or less, 100 nm or less, or 50 nm or less. The average particle diameter of the carbon nanoparticles may be, for example, 500 nm or less, 300 nm or less, or 100 nm or less. In some embodiments, the metal-based negative electrode active material may have a core/shell structure including a core, and a carbon-based material coating layer provided on the core, and the core may include silicon, a silicon alloy, silicon oxide, silicon nitride, silicon oxynitride, silicon carbide, a silicon-carbon composite, or a combination thereof. Because the metal-based negative electrode active material may include the silicon-based negative electrode active material, improved energy density may be provided without degradation in cycle characteristics of a lithium battery including the electrode active material.

In some embodiments, the negative electrode active material may additionally include other metal-based negative electrode active materials in addition to the metal-based negative electrode active material described above. The negative electrode active material may additionally include, for example, at least one selected from among a lithium metal, a metal alloyable with lithium, a transition metal oxide, and a non-transition metal oxide.

Examples of the metal alloyable with lithium may include Sn, Al, Ge, Pb, Bi, Sb, a Si-Y' alloy (wherein Y' is an alkali metal, an alkali earth metal, a Group 13 element, a Group 14 element, a transition metal, a rare earth element, or a combination thereof and is not Si), a Sn-Y' alloy (wherein Y' is an alkali metal, an alkali earth metal, a Group 13 element, a Group 14 element, a transition metal, a rare earth element, or a combination thereof and is not Sn), and/or the like. The element Y' may include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof. The transition metal oxide may be, for example, lithium titanium oxide, vanadium oxide, lithium vanadium oxide, and/or the like. The non-transition metal oxide may be, for example, $SnO_2$ and/or the like.

A content (e.g., amount) of the metal-based negative electrode active material may be, for example, in a range of about 1 wt% to about 10 wt%, about 2 wt% to about 10 wt%, about 3 wt% to about 10 wt%, about 4 wt% to about 10 wt%, or about 5 wt% to about 10 wt% with respect to (e.g., of) the total weight of the negative electrode active material layer. Because the negative electrode active material layer may include the metal-based negative electrode active material in such a range, improved discharge capacity may be provided without degradation in cycle characteristics.

The negative electrode active material may additionally include a carbon-based negative electrode active material. The carbon-based negative electrode active material may be, for example, crystalline carbon, amorphous carbon, or a mixture thereof. The crystalline carbon may be natural graphite or artificial graphite. The crystalline carbon may be, for example, shapeless, plate-like, flake-like, spherical, or fibrous carbon. The amorphous carbon may be, for example, soft carbon (lowtemperature calcined carbon), hard carbon, mesophase pitch carbide, calcined coke, and/or the like.

A weight ratio of the metal-based negative electrode active material and the carbon-based negative electrode active material included in the negative electrode active material may be in a range of about 5:95 to about 50:50, about 5:95 to about 40:60, about 5:95 to about 30:70, about 5:95 to about 20:80, or about 5:95 to about 15:85. Because the metal-based negative electrode active material and the carbon-based negative electrode active material may have a weight ratio in such a range, a lithium battery may have improved discharge capacity and excellent or suitable cycle characteristics at the same time. A content (e.g., amount) of the carbon-based negative electrode active material included in the negative electrode active material layer may be, for example, in a range of about 80 wt% to about 98 wt%, about 85 wt% to about 98 wt%, about 85 wt% to about 97 wt%, or about 85 wt% to about 95 wt% with respect to the total weight of the negative electrode active material layer.

The negative electrode current collector may include, for example, a substrate, and the substrate may include copper, stainless steel, aluminium, nickel, titanium, calcined carbon, or copper or stainless steel, but one or more embodiments are not limited thereto. Any material, which has high conductivity without causing a chemical change in a lithium battery, may be utilized. The negative electrode current collector may further include a coating layer including carbon, nickel, titanium, silver, or a combination thereof on the above-described substrate. The negative electrode current collector may include, for example, only the substrate. In the negative electrode current collector, a fine unevenness may be formed on a surface of the substrate to strengthen adhesive strength with the negative electrode active material layer. The negative electrode current collector may have one or more suitable forms such as a film, a sheet, a foil, a net, a porous body, a foam body, and/or a nonwoven fabric. The negative electrode current collector may be particularly a copper foil. The negative electrode current collector may have, for example, a thickness of about 3 μm to about 100 μm, about 3 μm to about 50 μm, or about 3 μm to about 20 μm.

In some embodiments, the negative electrode current collector may include, for example, a base film and a metal layer. The base film may include at least two surfaces and the metal layer may be provided on one surface or two surfaces of the base film. The negative electrode current collector may include a substrate, and the substrate may have a structure including, for example, a base film and a metal layer provided on one surface or two surfaces of the base film. The base film may include, for example, a polymer. The polymer may be, for example, a thermoplastic polymer. The polymer may include, for example, PET, PE, polypropylene (PP), PBT, PI, or a combination thereof. Because the base film may incude the thermoplastic polymer, if (e.g., when) a short circuit occurs, the base film may be melted to suppress or reduce a rapid increase in current. The base film may be, for example, an insulator. The metal layer may include, for example, indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof. The metal layer may include, for example, copper (Cu), stainless steel, titanium (Ti), iron (Fe), cobalt (Co), nickel (Ni), or an alloy thereof. The metal layer may serve as an electrochemical fuse to be cut if (e.g., when) an overcurrent occurs, thereby performing a short circuit prevention function. A thickness of the metal layer may be adjusted to adjust a limit current and a maximum current. The metal layer may be plated or deposited on the base film. If (e.g., when) the thickness of the metal layer is reduced, a limit current and/or a maximum current of an electrode current collector decrease, and thus the stability of a lithium battery during a short circuit may be improved. A lead tab may be added onto the metal layer for external connection. The lead tab may be welded to the metal layer or a metal layer/base film stack through ultrasonic welding, laser welding, spot welding, and/or the like. While the base film and/or the metal layer is melted during welding, the metal layer may be electrically connected to the lead tab. In order to more strongly weld the metal layer and the lead tab, a metal chip may be added between the metal layer and the lead tab. The metal chip may be a flake made of the same material as a metal of the metal layer. The metal chip may be, for example, a metal foil or a metal mesh. The metal chip may be, for example, an aluminium foil, a copper foil, or a SUS foil. If (e.g., when) the metal chip is provided on the metal layer and then welded to the lead tab, the lead tab may be welded to the metal chip/metal layer stack or a metal chip/metal layer/base film stack. During welding, while the base film, the metal layer, and/or the metal chip are melted, the metal layer or a metal layer/metal chip stack may be electrically connected to the lead tab. A metal chip and/or a lead tab may be added onto a portion of the metal layer. The base film may have, for example, a thickness of about 1 $\mu$m to $\mu$m 50 $\mu$m, about 1.5 $\mu$m to about 50 $\mu$m, about 1.5 $\mu$m to about 40 $\mu$m, or about 1 $\mu$m to about 30 $\mu$m. Because the base film may have a thickness in such a range, a weight of an electrode assembly may be more effectively reduced. A melting point of the base film may be, for example, in a range of about 100 °C to about 300 °C, about 100 °C to about 250 °C, or about 100 °C to about 200 °C. Because the base film may have a melting point in such a range, the base film may be melted and easily coupled to the lead tab in a process of welding the lead tab. In order to improve adhesive strength between the base film and the metal layer, surface treatment such as corona treatment may be performed on the base film. The metal layer may have, for example, a thickness of about 0.01 $\mu$m to about 3 $\mu$m, about 0.1 $\mu$m to about 3 $\mu$m, about 0.1 $\mu$m to about 2 $\mu$m, or about 0.1 $\mu$m to about 0.1 $\mu$m. Because the metal layer may have a thickness in such a range, the stability of an electrode assembly may be secured while conductivity is maintained. The metal chip may have, for example, a thickness of about 2 $\mu$m to about 10 $\mu$m, about 2 $\mu$m to about 7 $\mu$m, or about 4 $\mu$m to about 6 $\mu$m. Because the metal chip may have a thickness in such a range, the metal layer and the lead tab may be more easily connected. Because the negative electrode current collector may have such a structure, a weight of an electrode may be reduced, thereby improving an energy density. In some embodiments, a current collector having such a structure may also be utilized as a positive electrode current collector.

The negative electrode includes the negative electrode current collector and the negative electrode active material layer, and the negative electrode may have, for example, a thickness of about 3 $\mu$m to about 200 $\mu$m, about 10 $\mu$m to about 150 $\mu$m, about 20 $\mu$m to about 120 $\mu$m, or about 30 $\mu$m to 100 $\mu$m.

A negative electrode is prepared, for example, through the following method. For example, a negative electrode active material composition is prepared by mixing a metal-based negative electrode active material, a fibrous carbon-based conductive material, an acrylic-based binder, and a solvent. The prepared negative electrode active material composition may be applied directly on a negative electrode current collector and dried to prepare the negative electrode. In some embodiments, the negative electrode active material composition may be cast on a separate support, and then a film peeled off from (e.g., of) the support may be laminated on a metal current collector to prepare the negative electrode. The solvent utilized in preparing the negative electrode may be an organic solvent or water. As the solvent, for example, N-methylpyrrolidone, acetone, or water may be utilized, but one or more embodiments are not limited thereto. Any material usable in the art may be utilized. In the case of utilizing an aqueous binder, the solvent may be water. Contents of the metal-based negative electrode active material, the carbon-based negative electrode active material, the conductive material, the acrylic-based binder, and the solvent are at levels commonly or suitably utilized in a lithium battery. According to the requirements and configuration of a lithium battery, at least one selected from among the conductive material and the solvent may not be provided. The negative electrode active material composition may further include at least one selected from among a carbon-based negative electrode active material, a particulate carbon-based conductive material, and a non-acrylic-based binder.

A lithium battery according to another embodiment includes a positive electrode, the above-described negative electrode, and an electrolyte provided between the positive electrode and the negative electrode.

Because the above-described negative electrode includes an acrylic-based binder and a fibrous carbon-based conductive material, a volume change of the negative electrode may be suppressed or reduced during charging/discharging, and the cycle characteristics of the lithium battery including the negative electrode may be improved.

A shape of the lithium battery is not particularly limited, and the lithium battery may include (e.g., be) a lithium ion battery, a lithium solid (e.g., solid-state) battery, a lithium sulfur battery, a lithium air battery, and/or the like. The lithium battery may include both (e.g., simultaneously) a lithium primary battery and a lithium secondary battery. In the present specification, unless specifically stated otherwise, the lithium battery refers to the lithium secondary battery.

A lithium battery may be manufactured, for example, through the following method, but one or more embodiments are not necessarily limited to such a method. Any method utilized in the art may be utilized.

First, the described negative electrode is prepared.

Next, a positive electrode is prepared.

For example, a positive electrode active material composition in which a positive electrode active material, a conductive material, a binder, and a solvent are mixed is prepared. The positive electrode active material composition is applied directly on a metal current collector to prepare a positive electrode plate. In some embodiments, the positive electrode active material composition may be cast on a separate support, and then a film peeled off from (e.g., of) the support may be laminated on a metal current collector to prepare the positive electrode plate. The positive electrode is not limited to the forms listed above and may have forms other than the above forms.

As the positive electrode active material, any material, which is a lithium-containing metal oxide and is commonly utilized in the art, may be utilized without limitation. For example, at least one composite oxide of lithium and a metal selected from among cobalt, manganese, nickel, and a combination thereof may be utilized. A specific example of the positive electrode active material may include a compound represented by any one selected from among formulas of $Li_aA_{1-b}B'_bD_2$ (wherein $0.90 \leq a \leq 1.8$ and $0 \leq b \leq 0.5$), $Li_aE_{1-b}B'_bO_{2-c}D_c$ (wherein $0.90 \leq a \leq 1.8$, $0 \leq b \leq 0.5$, and $0 \leq c \leq 0.05$), $LiE_{2-b}B'_bO_{4-c}D_c$ (wherein $0 \leq b \leq 0.5$ and $0 \leq c \leq 0.05$), $Li_aNi_{1-b-c}Co_bB'_cD_\alpha$ (wherein $0.90 \leq a \leq 1.8$, $0 \leq b \leq 0.5$, $0 \leq c \leq 0.05$, and $0 < \alpha \leq 2$), $Li_aNi_{1-b-c}Co_bB'_cO_{2-\alpha}F'_\alpha$ (wherein $0.90 \leq a \leq 1.8$, $0 \leq b \leq 0.5$, $0 \leq c \leq 0.05$, and $0 < \alpha < 2$), $Li_aNi_{1-b-c}Co_bB'_cO_{2-\alpha}F'_2$ (wherein $0.90 \leq a \leq 1.8$, $0 \leq b \leq 0.5$, $0 \leq c \leq 0.05$, and $0 < \alpha < 2$), $Li_aNi_{1-b-c}Mn_bB'_cD_\alpha$ (wherein $0.90 \leq a \leq 1$, $0 \leq b \leq 0.5$, $0 \leq c \leq 0.05$, and $0 \leq \alpha \leq 2$), $Li_aNi_{1-b-c}Mn_bB'_cO_{2-\alpha}F'\alpha$ (wherein $0.90 \leq a \leq 1.8$, $0 \leq b \leq 0.5$, $0 \leq c \leq 0.05$, and $0 < \alpha < 2$), $Li_aNi_{1-b-c}Mn_bB'_cO_{2-a}F'_2$ (wherein $0.90 \leq a \leq 1.8$, $0 \leq b \leq 0.5$, $0 \leq c \leq 0.05$, and $0 < \alpha < 2$), $Li_aNi_bE_cG_dO_2$ (wherein $0.90 \leq a \leq 1.8$, $0 \leq b \leq 0.9$, $0 \leq c \leq 0.5$, and $0.001 \leq d \leq 0.1$), $Li_aNi_bCo_cMn_dG_eO_2$ (wherein $0.90 \leq a \leq 1.8$, $0 \leq b \leq 0.9$, $0 \leq c \leq 0.5$, $0 \leq d \leq 0.5$, and $0.001 \leq e \leq 0.1$), $Li_aNiG_bO_2$ (wherein $0.90 \leq a \leq 1.8$ and $0.001 \leq b \leq 0.1$), $Li_aCoG_bO_2$ (wherein $0.90 \leq a \leq 1.8$ and $0.001 \leq b \leq 0.1$), $Li_aMnG_bO_2$ (wherein $0.90 \leq a \leq 1.8$ and $0.001 \leq b \leq 0.1$), $Li_aMn_2G_bO_4$ (wherein $0.90 \leq a \leq 1.8$ and $0.001 \leq b \leq 0.1$), $QO_2$, $QS_2$, $LiQS_2$; $V_2O_5$; $LiX_2O_5$; $LiI'O_2$, $LiNiVO_4$, $Li_{(3-f)}J_2(PO_4)_3$ (wherein $0 \leq f \leq 2$), $Li_{(3-f)}Fe_2(PO_4)_3$ (wherein $0 \leq f \leq 2$), and $LiFePO_4$. In the formulas, A may be Ni, Co, Mn, or a combination thereof, B' may be Al, Ni, Co, Mn, Cr, Fe, Mg, Sr, V, a rare earth element, or a combination thereof, D may be O, F, S, P, or a combination thereof, E may be Co, Mn, or a combination thereof, F' may be F, S, P, or a combination thereof, G may be Al, Cr, Mn, Fe, Mg, La, Ce, Sr, V, or a combination thereof, Q may be Ti, Mo, Mn, or a combination thereof, I' may be Cr, V, Fe, Sc, Y, or a combination thereof, and J may be V, Cr, Mn, Co, Ni, Cu, or a combination thereof. The positive electrode active material may be, for example, $LiCoO_2$, $LiMn_xO_{2x}$ (wherein x is 1 or 2), $LiNi_{1-x}Mn_xO_{2x}$ (wherein $0 < x < 1$), $LiNi_{1-x-y}Co_xMn_yO_2$ (wherein $0.5 < 1-x-y < 0.99$, $0 \leq x \leq 0.3$, and $0 \leq y \leq 0.3$), or $LiFePO_4$.

A material having a coating layer on a surface of a lithium-containing metal oxide may be utilized as a positive electrode active material, or a lithium-containing metal oxide and a compound having a coating layer on a surface of the lithium-containing metal oxide may be mixed and utilized. The coating layer may include, for example, a coating element compound of an oxide or hydroxide of a coating element, an oxyhydroxide of the coating element, an oxycarbonate of the coating element, or a hydroxycarbonate of the coating element. A compound constituting the coating layer is amorphous or crystalline. The coating element included in the coating layer may include Mg, Al, Co, K, Na, Ca, Si, Ti, V, Sn, Ge, Ga, B, As, Zr, or a mixture thereof. In a process of forming the coating layer, any coating method may be utilized as long as the compound may be coated with such elements through a method (for example, a spray coating method or a dipping method) that does not adversely affect physical properties of the positive electrode active material. Because the coating method is suitable well (well known) to those who work in the related field, a detailed description thereof will not be provided.

The conductive material may include carbon black, graphite fine particles, and/or the like, but one or more embodiments are not limited thereto. Any material usable as a conductive material in the art may be utilized.

The binder may include at least one selected from among a vinylidene fluoride/hexafluoropropylene copolymer, PVDF, polyacrylonitrile, polymethyl methacrylate, polytetrafluoroethylene, a mixture thereof, or a styrene butadiene rubberbased polymer, but one or embodiments are not limited thereto. Any material usable as a binder in the art may be utilized.

The solvent may include N-methylpyrrolidone, acetone, or water, but one or more embodiments are not limited thereto. Any solvent usable in the art may be utilized.

Contents of the positive electrode active material, the conductive material, the binder, and the solvent are at a level commonly utilized in a lithium battery. According to the use and configuration of a lithium battery, at least one selected from among the conductive material, the binder, and the solvent may not be provided.

Next, a separator to be inserted between the positive electrode and the negative electrode is prepared.

As the separator, any separator commonly utilized in a lithium battery may be utilized. For example, a separator having low resistance to the movement of ions in an electrolyte and an excellent or suitable electrolyte impregnation ability may be utilized. For example, the separator may include at least one selected from among a glass fiber, polyester, Teflon, PE, PP, PTFE, and a combination thereof and may be in the form of a nonwoven fabric or a woven fabric. For example, a windable separator including PE, PP, and/or the like may be utilized in a lithium ion battery, and a separator having an excellent or suitable electrolyte impregnation ability may be utilized in a lithium ion polymer battery.

The separator is prepared through the following example method, but one or more embodiments are not necessarily limited to such a method. A method may be adjusted according to required conditions.

First, a polymer resin, a filler, and a solvent are mixed to prepare a separator composition. The separator composition may be applied directly on an electrode and dried to form the separator. In some embodiments, the separator composition may be cast on a support, and then a separator film peeled off from (e.g., of) the support may be laminated on an electrode to form the separator.

The polymer resin utilized for preparing the separator is not particularly limited, and any material utilized in a binding material of an electrode plate may be utilized. For example, the polymer resin may include a vinylidene fluo-

EP 4 439 734 A1

ride/hexafluoropropylene copolymer, PVDF, polyacrylonitrile, polymethyl methacrylate, or a mixture thereof.

Next, an electrolyte to be inserted between the positive electrode and the negative electrode is prepared.

The electrolyte is, for example, an organic electrolyte solution. For example, a lithium salt is dissolved in an organic solvent to prepare the organic electrolyte. Any material that is a material suitable to be utilized as an organic solvent may be utilized . Examples of the organic solvent may include propylene carbonate, ethylene carbonate (EC), fluoroethylene carbonate, butylene carbonate, dimethyl carbonate (DMC), diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, $\gamma$-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, a dimethyl ether, or a mixture thereof. Any material may be utilized as long as the material is utilized as a lithium salt in the art. Examples of the lithium salt may include $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_2$, $LiAlCl_4$, $LiN(C_xF_{2x+1}SO_2)(C_yF_{2y+1}SO_2)$ (wherein x and y are each a natural number from 1 to 20), LiCl, Lil, or a mixture thereof.

In some embodiments, the electrolyte is, for example, a solid electrolyte. The solid electrolyte is, for example, a polymer solid electrolyte. Examples of the polymer solid electrolytes may include a polyethylene derivative, a polyethylene oxide derivative, a polypropylene oxide derivative, a phosphoric acid ester polymer, polyester sulfide, polyvinyl alcohol, PVDF, a polymer including an ionic dissociation group, and/or the like. The solid electrolyte is, for example, an inorganic solid electrolyte. The inorganic solid electrolyte is, for example, an oxide-based solid electrolyte or a sulfidebased solid electrolyte. Examples of the inorganic solid electrolyte may include $Li_3N$, LiI, $Li_5NI_2$, $Li_3N-LiI-LiOH$, $LiSiO_4$, $Li_2SiS_3$, $Li_4SiO_4$, $Li_4SiO_4-LiI-LiOH$, $Li_3PO_4-Li_2S-SiS_2$, and/or the like.

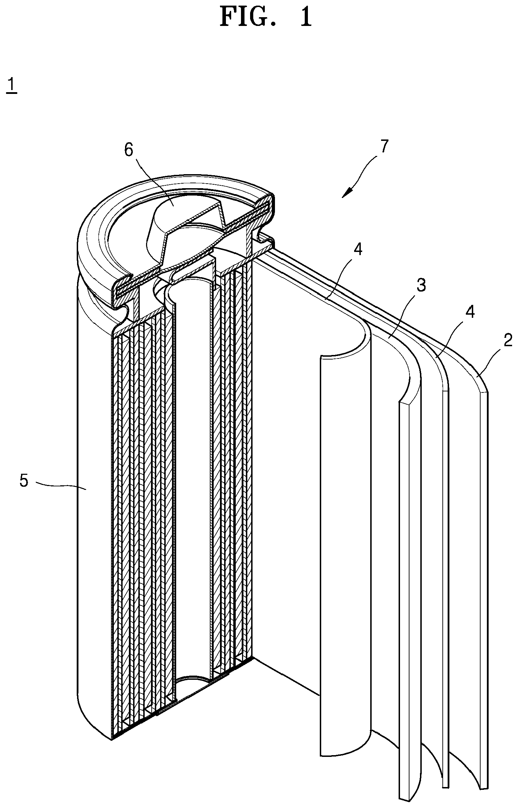

Referring to FIG. 1, a lithium battery 1 according to one or more embodiments may include a positive electrode 3, a negative electrode 2, and a separator 4. The positive electrode 3, the negative electrode 2, and the separator 4 may be wound or folded to form a battery structure 7. The formed battery structure 7 may be accommodated in a battery case 5. An organic electrolyte may be injected into the battery case 5, and the battery case 5 may be sealed with a cap assembly 6 to complete the lithium battery 1. The battery case 5 may have a cylindrical shape, but one or more embodiments are not necessarily limited to such a shape. For example, the battery case 5 may have a prismatic shape, a thin film shape, and/or the like.

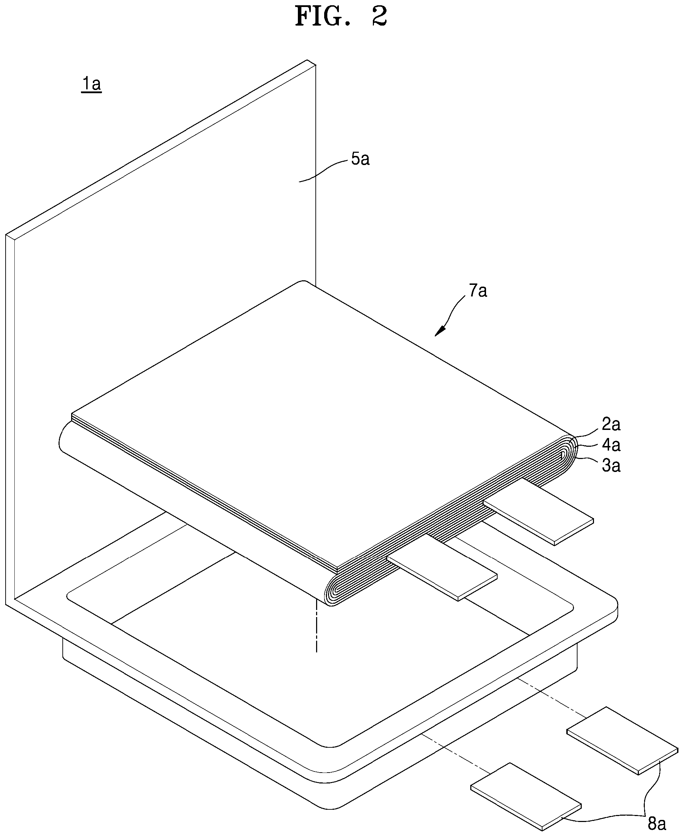

Referring to FIG. 2, a lithium battery 1a according to one or more embodiments may include a positive electrode 3a, a negative electrode 2a, and a separator 4a. The separator 4a may be provided between the positive electrode 3a and the negative electrode 2a, and the positive electrode 3a, the negative electrode 2a, and the separator 4a may be wound or folded to form a battery structure 7a. The formed battery structure 7a may be accommodated in a battery case 5a. The lithium battery 1a may include an electrode tab 8a serving as an electrical path for guiding a current formed in the battery structure 7a to the outside. An organic electrolyte may be injected into the battery case 5a, and the battery case 5a may be sealed to complete the lithium battery 1a. The battery case 5a may have a prismatic shape, but one or more embodiments are not necessarily limited to such a shape. For example, the battery case 5a may have a cylindrical shape, a thin film shape, and/or the like.

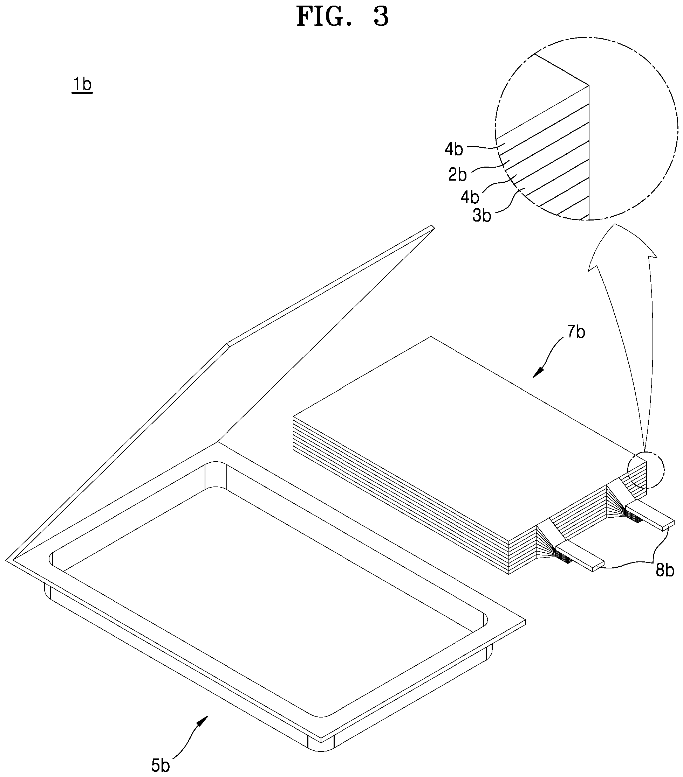

Referring to FIG. 3, a lithium battery 1b according to one or more embodiments may include a positive electrode 3b, a negative electrode 2b, and a separator 4b. The separator 4b may be provided between the positive electrode 3b and the negative electrode 2b to form a battery structure 7b. The battery structure 7b may be stacked in a bi-cell structure and then accommodated in a battery case 5b. The lithium battery 1b may include an electrode tab 8b serving as an electrical path for guiding a current formed in the battery structure 7b to the outside. An organic electrolyte may be injected into the battery case 5b, and the battery case 5b may be sealed to complete the lithium battery 1b. The battery case 5b may have a prismatic shape, but one or more embodiments are not necessarily limited to such a shape. For example, the battery case 5b may have a cylindrical shape, a thin film shape, and/or the like.

A pouch-type or kind lithium battery corresponds to a case in which a pouch is utilized as a battery case in the lithium batteries of FIGS. 1 to 3. The pouch-type or kind lithium battery may include one or more battery structures. A separator may be provided between a positive electrode and a negative electrode to form the battery structure. After the battery structure is stacked in a bi-cell structure, the battery structure may be impregnated in an organic electrolyte, accommodated in a pouch, and sealed to complete the pouch-type or kind lithium battery. For example, although not shown in the drawing, the above-described positive electrode, negative electrode, and separator may be simply stacked and accommodated in a pouch in the form of an electrode assembly or may be wound or folded into a jelly roll-shaped electrode assembly and then accommodated in a pouch. Subsequently, an organic electrolyte may be injected into the pouch, and the pouch may be sealed to complete a lithium battery.

A lithium battery may have excellent or suitable lifespan characteristics and high rate characteristics and thus may be utilized, for example, in electric vehicles (EVs). For example, the lithium battery may be utilized in hybrid vehicles such as plug-in hybrid electric vehicles (PHEVs). In some embodiments, the lithium battery may be utilized in applications (e.g., fields) in which large amounts of power are required to be stored. For example, the lithium battery may be utilized in electric bicycles, power tools, and/or the like.

A plurality of lithium batteries may be stacked to form a battery module, and a plurality of battery modules may form a battery pack. The battery pack may be utilized in all devices requiring high capacity and high output power. For example, the battery pack may be utilized in laptop computers, smartphones, electric vehicles, and/or the like. A battery module may include, for example, a plurality of batteries and a frame for holding the plurality of batteries. A battery pack may include, for example, a plurality of battery modules and a bus bar for connecting the plurality of battery modules. The battery module and/or the battery pack may further include a cooling device. A plurality of battery packs may be controlled or selected by a battery management system. The battery management system may include a battery pack and a battery controller connected to the battery pack.

As utilized herein, a substituent may be derived by substitution of at least one hydrogen atom in an unsubstituted mother group with another atom or a functional group. Unless stated otherwise, if (e.g., when) any functional group is deemed to be "substituted," it refers to that the functional group is substituted with at least one substituent selected from among a C1-C4 alkyl group, a C2-C4 alkenyl group, a C2-C4 alkynyl group, a C3-C6 cycloalkyl group, a C3-C6 cycloalkenyl group, a C7-C10 aryl group, and halogen. If (e.g., when) it is described that a functional group is "optionally substituted," it is meant that the functional group may be substituted with the described substituent.

As utilized herein, "a" and "b" in the term "Ca-Cb" denote the number of carbon atoms in a particular functional group. For example, the functional group may include "a" to "b" carbon atoms. For example, a "C1 to C4 alkyl group" refers to an alkyl group having 1 to 4 carbon atoms, that is, $CH_3$-, $CH_3CH_2$-, $CH_3CH_2CH_2$-, $(CH_3)_2CH$-, $CH_3CH_2CH_2CH_2$-, $CH_3CH_2CH(CH_3)$-, and $(CH_3)_3C$-.

As utilized herein, a particular radical may refer to a mono-radical or a di-radical depending on the context. For example, if (e.g., when) a substituent needs two binding sites for binding with the rest of the molecule, the substituent may be understood as a di-radical. For example, a substituent specified as an alkyl group that needs two binding sites may include a di-radical such as $-CH_2$-, $-CH_2CH_2$-, and/or $-CH_2CH(CH_3)CH_2$-. The term "alkylene" as utilized herein clearly indicates that the radical is a di-radical.

As utilized herein, the terms "alkyl group" or "alkylene group" refers to a branched or unbranched aliphatic hydrocarbon group. In one or more embodiments, an alkyl group may be substituted or unsubstituted. One or more embodiments are not necessarily limited thereto, and the alkyl group may include a methyl group, an ethyl group, a propyl group, an isopropyl group, a butyl group, an isobutyl group, a tert-butyl group, a pentyl group, and/or the like, each of which may optionally be substituted or unsubstituted. In one or more embodiments, the alkyl group may have 1 to 5 carbon atoms. For example, a C1-C5 alkyl group may be methyl, ethyl, propyl, isopropyl, butyl, iso-butyl, sec-butyl, pentyl, 3-pentyl, and/or the like, but is not necessarily limited thereto.

The term "halogen" includes fluorine, bromine, chlorine, iodine, and/or the like. The term "cyano" refers to -CN.

Terms such as "substantially," "about," and "approximately" are used as relative terms and not as terms of degree, and are intended to account for the inherent deviations in measured or calculated values that would be recognized by those of ordinary skill in the art. They may be inclusive of the stated value and an acceptable range of deviation as determined by one of ordinary skill in the art, considering the limitations and error associated with measurement of that quantity. For example, "about" may refer to one or more standard deviations, or $\pm$ 30%, 20%, 10%, 5% of the stated value.

Numerical ranges disclosed herein include and are intended to disclose all subsumed sub-ranges of the same numerical precision. For example, a range of "1.0 to 10.0" includes all subranges having a minimum value equal to or greater than 1.0 and a maximum value equal to or less than 10.0, such as, for example, 2.4 to 7.6.

Hereinafter, embodiments will be described in more detail with reference to the following Examples and Comparative Examples. However, Examples are for illustrative purposes only and are not intended to limit the scope of the present disclosure.

**EXAMPLES**

**Synthesis of acrylic-based binder**

**Preparation Example 1: PEGMA with molecular weight of 400 Dalton, substitution ratio of 60 mol% for AA Li+, AA:AN:PEGMA=molar ratio of 44:53:3**

In a reactor equipped with a stirrer, a thermometer, and a cooling tube, an acrylic acid (AA) monomer, an acrylonitrile (AN) monomer, poly(ethyleneglycol) methyl ether methacrylate (PEGMA) monomer with a weight average molecular weight Mw of 400 Dalton were added in a ratio (e.g., amount) of 45 parts by weight, 40 parts by weight, and 15 parts by weight with respect to 100 parts by weight of all monomers, and VA-086 initiator (manufactured by Wako Pure Chemical Industries Ltd.), AR-1025 emulsifier (manufactured by DKS Co. Ltd.), and distilled water were additionally added thereto. The reactor was controlled or selected to have a stable internal temperature between 65 °C and 70 °C to perform a reaction in a nitrogen atmosphere for 18 hours. The reactor was cooled to room temperature to then obtain a copolymer of poly(acrylic acid-co-acrylonitrile-co-polyethylene glycol methyl ether methacrylate). A molar ratio of an AA, AN, and PEGMA was 44:53:3. A lithium hydroxide aqueous solution was added to the obtained copolymer and stirred to prepare a binder aqueous solution. A content (e.g., amount) of utilized lithium hydroxide was adjusted such that 60 mol% of a carboxyl group included in a first repeating unit derived from an AA was substituted with a lithium ion to have the form of a lithium salt. An acrylic-based binder in which 60 mol% of the carboxyl groups included in the first repeating unit derived from the AA had the form of a lithium salt was prepared.

A viscosity of an acrylic-based binder aqueous solution having a solid content (e.g., amount) of 5.5 wt% was 2,870 centipoise at a temperature of 25 °C and a pressure of 1 atm.

**Preparation Example 2: PEGMA with molecular weight of 200 Dalton, substitution ratio of 60 mol% for AA Li+**

An acrylic-based binder was prepared in substantially the same manner as in Preparation Example 1, except that a weight average molecular weight of PEGMA was changed to 200 Dalton.

**Preparation Example 3: PEGMA with molecular weight of 600 Dalton, substitution ratio of 60 mol% for AA Li+**

An acrylic-based binder was prepared in substantially the same manner as in Preparation Example 1, except that a weight average molecular weight of PEGMA was changed to 600 Dalton.

**Preparation Example 4: PEGMA with molecular weight of 400 Dalton, substitution ratio of 40 mol% for AA Li+.**

An acrylic-based binder was prepared in substantially the same manner as in Preparation Example 1, except that a content (e.g., amount) of utilized lithium hydroxide was changed such that 40 mol% of a carboxyl group included in a first repeating unit derived from an AA had the form of a lithium salt.

**Preparation Example 5: PEGMA with molecular weight of 400 Dalton, substitution ratio of 80 mol% for AA Li+**

An acrylic-based binder was prepared in substantially the same manner as in Preparation Example 1, except that a content (e.g., amount) of utilized lithium hydroxide was changed such that 80 mol% of a carboxyl group included in a first repeating unit derived from an AA had the form of a lithium salt.

**Preparation Example 6: PEGMA with molecular weight of 400 Dalton, substitution ratio of 60 mol% for AA Li+, AA:AN:PEGMA=molar ratio of 46:53:1**

An acrylic-based binder was prepared in substantially the same manner as in Preparation Example 1, except that a molar ratio of an AA, AN, and PEGMA was changed to 46:53:1.

**Preparation Example 7: PEGMA with molecular weight of 400 Dalton, substitution ratio of 60 mol% for AA Li+, AA:AN:PEGMA=molar ratio of 41:53:6**

An acrylic-based binder was prepared in substantially the same manner as in Preparation Example 1, except that a molar ratio of an AA, AN, and PEGMA was changed to 41:53:6.

**Reference Preparation Example 1: PEGMA with molecular weight of 1,500 Dalton, substitution ratio of 60 mol% for AA Li+**

An acrylic-based binder was prepared in substantially the same manner as in Example 1, except that a weight average molecular weight of PEGMA was changed to 1,500 Dalton.

**Reference Preparation Example 2: PEGMA with molecular weight of 400 Dalton, substitution ratio of 10 mol% for AA Li+**

An acrylic-based binder was prepared in substantially the same manner as in Preparation Example 1, except that a content (e.g., amount) of utilized lithium hydroxide was changed such that 10 mol% of a carboxyl group included in a first repeating unit derived from an AA had the form of a lithium salt.

The acrylic-based binder prepared in Comparative Preparation Example 2 was water-insoluble.

**Reference Preparation Example 3: PEGMA with molecular weight of 400 Dalton, substitution ratio of 90 mol% for AA Li+**

An acrylic-based binder was prepared in substantially the same manner as in Preparation Example 1, except that a content (e.g., amount) of utilized lithium hydroxide was changed such that 90 mol% of a carboxyl group included in a first repeating unit derived from an AA had the form of a lithium salt.

**Reference Preparation Example 4: PEGMA with molecular weight of 400 Dalton, substitution ratio of 60 mol% for AA Li+, AA:AN:PEGMA=molar ratio of 47:53:0**

An acrylic-based binder was prepared in substantially the same manner as in Preparation Example 1, except that a molar ratio of an AA, AN, and PEGMA was changed to 47:53:0.

**Reference Preparation Example 5: PEGMA with molecular weight of 400 Dalton, substitution ratio of 60 mol% for AA Li+, AA:AN:PEGMA=molar ratio of 36:53:11**

An acrylic-based binder was prepared in substantially the same manner as in Preparation Example 1, except that a molar ratio of an AA, AN, and PEGMA was changed to 36:53:11.

**Manufacturing of negative electrode and lithium battery (half-cell)**

**Manufacturing Example 1**

**Preparation of negative electrode**

7 wt% of a carbon-silicon composite (SCN manufactured by BTR New Energy Technology Co., Ltd.) including carbon-coated silicon particles as a metal-based negative electrode active material, 89.975 wt% of artificial graphite (SFG6 manufactured by Timcal) as a carbon-based negative electrode active material, 1.0 wt% of the acrylic-based binder prepared in Preparation Example 1 as an acrylic-based binder, 2.0 wt% of SBR as a non-acrylic-based binder, and 0.025 wt% of carbon nanotubes as a carbon-based conductive material were mixed, introduced into distilled water, and then stirred for 60 minutes utilizing a mechanical stirrer to prepare a negative electrode active material slurry. The prepared negative electrode active material slurry was applied to a thickness of about 60 micrometer ($\mu$m) on a copper current collector with a thickness of 10 $\mu$m utilizing a doctor blade, dried in a hot air dryer at a temperature of 100 °C for 0.5 hours, dried once more for 4 hours under conditions of vacuum and a temperature of 120 °C, and roll-pressed to prepare a negative electrode. The carbon nanotubes had an average length of $50\pm5$ $\mu$m, an average diameter of 15 nm, a bulk density of 0.04 gram per cubic centimeter (g/cm$^3$), and a Raman peak intensity ratio $I_D/I_G$ of 0.95.

**Manufacturing of lithium battery**

The prepared negative electrode was utilized, a lithium metal was utilized as a counter electrode, a polyethylene separator with a thickness of 20 $\mu$m was utilized as a separator, and a mixture in which a 1.3 M LiPF$_6$ lithium salt was dissolved in ethylene carbonate (EC), diethyl carbonate (DEC), and ethylmethyl carbonate (EMC) (EC/DEC/EMC=volume ratio of 3:5:2) was utilized as an electrolyte to manufacture a lithium battery (coin cell).

**Manufacturing Examples 2 to 7 and Reference Manufacturing Examples 1 to 5**

Lithium batteries (coin cells) were manufactured in substantially the same manner as in Manufacturing Example 1, except that the acrylic-based binders prepared in Preparation Examples 2 to 7 and Reference Preparation Examples 1 to 5 were utilized instead of the acrylic-based binder prepared in Preparation Example 1, respectively.

**Evaluation Example 1: Evaluation of charge/discharge characteristics at room temperature (25 °C)**

The lithium batteries manufactured in Manufacturing Examples 1 to 7 and Reference Manufacturing Examples 1 to 5 were (each) charged at a constant current rate of 0.2 C at a temperature of 25 °C until a voltage reached 4.20 V (vs. Li) and were discharged at a constant current rate of 0.2 C until the voltage reached 2.8 V (vs. Li) (formation operation).
The lithium batteries subjected to the formation operation were charged at a constant current rate of 1.0 C at a temperature of 25 °C until the voltage reached 4.20 V (vs. Li) and were discharged until the voltage reached 2.8 V (vs. Li) during discharging (1st cycle).

Such a charging/discharging cycle was repeated 100 times. The lithium batteries were rested for 10 minutes after every charging/discharging cycle.

A capacity retention rate at a 100th cycle is defined by Equation 1.

## Equation 1

$$\text{capacity retention ratio} = [\text{discharge capacity at } 100^{th} \text{ cycle/discharge capacity at } 1^{st} \text{ cycle}] \times 100$$

### Evaluation Example 2: Measurement of initial electrode plate expansion ratio

In a formation operation of a lithium battery assembled in Evaluation Example 1, after first charging/discharging was performed at a constant current rate of 0.1 C, the lithium battery was disassembled to measure a thickness of a negative electrode, and the measured thickness was referred to as a thickness of the negative electrode after charging/discharging.

A thickness of the negative electrode before assembly of the lithium battery was measured and referred to as a thickness of the negative electrode before assembly.

An initial electrode plate expansion ratio is represented by Equation 2.

## Equation 2

$$\text{thickness expansion ratio (\%)} = [(\text{thickness of negative electrode after charging/discharging in formation operation} - \text{thickness of negative electrode before assembly})/\text{thickness of negative electrode before assembly}] \times 100$$

An initial electrode plate expansion ratio of each of negative electrodes prepared in Manufacturing Examples 1 to 7 and Reference Manufacturing Examples 1 to 5 was measured.

### Evaluation Example 3: Measurement of precipitation amount of lithium

In the formation operation of the lithium battery assembled in Evaluation Example 1, after first charging/discharging was performed at a constant current rate of 0.1 C, the lithium battery was disassembled to measure a content (e.g., amount) of lithium precipitated on a surface of the negative electrode utilizing ion coupled plasma Mass spectroscopy (ICP-MS). A precipitation amount of lithium was calculated as a content (e.g., amount) of precipitated lithium with respect to 100 parts by weight of a negative electrode active material.

For the negative electrodes and the lithium batteries of Manufacturing Examples 1 to 7 and Reference Manufacturing Examples 1 to 5, measurement results of lifespan characteristics at room temperature, an initial electrode expansion ratio (of each), and a precipitation amount of lithium (of each) of Evaluation Examples 1 to 3 are described.

As compared with the negative electrodes of Reference Manufacturing Examples 1 to 5, the negative electrodes of Manufacturing Examples 1 to 7 had a similar initial electrode plate expansion ratio, a precipitation amount of lithium thereof was slightly reduced, and a capacity retention ratio thereof was considerably improved.

As compared with the negative electrodes of Manufacturing Examples 1 to 3 including the acrylic-based binder which included a third repeating unit derived from polyethylene glycol methyl ether methacrylate with a molecular weight of 200 Dalton to 600 Dalton, the negative electrode of Reference Manufacturing Example 1, which included the acrylic-based binder including a third repeating unit derived from polyethylene glycol methyl ether methacrylate with a molecular weight of 1,500, had a similar initial electrode plate expansion ratio, but a precipitation amount of lithium thereof was considerably increased, and a capacity retention ratio thereof was considerably lowered.

Because the acrylic-based binder of Reference Manufacturing Example 2 was a non-water-soluble binder, it was impossible to prepare a negative electrode active material slurry utilizing distilled water. As a result, it was impossible to prepare the negative electrode of Reference Manufacturing Example 2.

As compared with the negative electrodes of Manufacturing Examples 4 to 5 including the acrylic-based binder which included a first repeating unit derived from an AA in which 40 mol% to 80 mol% of Li+ ions were substituted, the negative electrode of Reference Manufacturing Example 3, which included the acrylic-based binder including a first repeating unit derived from an AA in which 90 mol% of Li+ ions were substituted, had a similar initial electrode plate expansion ratio, but a precipitation amount of lithium thereof was slightly increased, and a capacity retention ratio thereof was slightly lowered.

As compared with the negative electrodes of Manufacturing Examples 1, 6, and 7 including the acrylic-based binder which included 1 mol% to 6 mol% of a third repeating unit derived from polyethylene glycol methyl ether methacrylate, the negative electrode of Reference Manufacturing Example 4, which included the acrylic-based binder not including a third repeating unit derived from polyethylene glycol methyl ether methacrylate, had a similar initial electrode plate expansion ratio, but a precipitation amount of lithium thereof was considerably increased, and a capacity retention ratio thereof was considerably lowered. In an acrylic-based binder not including a third repeating unit derived from an unsaturated carboxylic acid is excessively increased, the negative electrode of Reference Manufacturing Example 4 may be brittle.

As compared with the negative electrodes of Manufacturing Examples 1, 6, and 7 including the acrylic-based binder which included 1 mol% to 6 mol% of the third repeating unit derived from the polyethylene glycol methyl ether methacrylate, the negative electrode of Reference Manufacturing Example 5, which included the acrylic-based binder including 11 mol% of a third repeating unit derived from polyethylene glycol methyl ether methacrylate, had a similar initial electrode plate expansion ratio and has a similar precipitation amount of lithium, but a capacity retention ratio thereof was considerably lowered.

**Manufacturing of negative electrode and lithium battery (full cell)**

**Example 1**

**Preparation of negative electrode**

7 wt% of a carbon-silicon composite (SCN manufactured by BTR New Energy Technology Co., Ltd.) including carbon-coated silicon particles as a metal-based negative electrode active material 89.975 wt% of artificial graphite (SFG6 manufactured by Timcal) as a carbon-based negative electrode active material, 1.0 wt% of the acrylic-based binder prepared in Preparation Example 1 as an acrylic-based binder, 2.0 wt% of SBR as a non-acrylic-based binder, and 0.025 wt% of carbon nanotubes as a carbon-based conductive material were mixed, introduced into distilled water, and then stirred for 60 minutes utilizing a mechanical stirrer to prepare a negative electrode active material slurry. The prepared negative electrode active material slurry was applied to a thickness of about 60 $\mu$m on a copper current collector with a thickness of 10 $\mu$m utilizing a doctor blade, dried in a hot air dryer at a temperature of 100 °C for 0.5 hours, dried once more for 4 hours under conditions of vacuum and a temperature of 120 °C, and roll-pressed to prepare a negative electrode. A loading level of the negative electrode active material layer was 21.5 milligram per cubic centimeter (mg/cm$^2$). The carbon nanotubes had an average length of $50\pm5$ $\mu$m, an average diameter of 15 nm, a bulk density of 0.04 g/cm$^3$, and a Raman peak intensity ratio $I_D/I_G$ of 0.95.

**Preparation of positive electrode**

$LiNi_{0.8}Co_{0.15}Al_{0.05}O_2$ as a positive electrode active material and a carbon conductive material (Denka black) were uniformly mixed, and then a pyrrolidone solution including a PVDF binder was added thereto to prepare a positive electrode active material slurry such that a weight ratio of the positive electrode active material, the carbon conductive material, and the binder was 97:1.5:1.5. The prepared positive electrode active material slurry was applied to a thickness on a 15 $\mu$m thick aluminium foil positive electrode current collector utilizing a 3-roll applied, dried, and additionally dried once more under a vacuum condition of a temperature of 110 °C to prepare a dried product. The prepared dried product was rolled utilizing a roll press to prepare a positive electrode.

**Manufacturing of lithium battery**

The prepared negative electrode and positive electrode were utilized, a polyethylene separator with a thickness of 20 $\mu$m was utilized as a separator, and a mixture in which a 1.3 M LiPF$_6$ lithium salt was dissolved in ethylene carbonate (EC), diethyl carbonate (DEC), and ethylmethyl carbonate (EMC) (EC/DEC/EMC=volume ratio of 3:5:2) was utilized as an electrolyte to manufacture a lithium battery (pouch cell). The manufactured lithium battery had a capacity of about 80 milliampere hour per gram (mAh/g).

**Examples 2 to 9**

Negative electrodes and lithium batteries of Examples 2 to 9 were manufactured in substantially the same manner as in Example 1, except that contents of a utilized negative electrode active material, a utilized binder, and a utilized conductive material were changed as shown in Table 1.

In the negative electrode active material, a content (e.g., amount) of a metal-based negative electrode active material was kept constant, and a content (e.g., amount) of a carbon-based negative electrode active material was changed according to a composition of a negative electrode active material layer. Carbon nanoparticles utilized in Example 9 had an average particle diameter of 30 nm.

**Comparative Examples 1 to 8**

Negative electrodes and lithium batteries of Comparative Examples 1 to 8 were manufactured in substantially the same manner as in Example 1, except that contents of a utilized negative electrode active material, a utilized binder, and a utilized conductive material were changed as shown in Table 1.

Table 1

| | Negative electrode active material [wt%] | Binder of Preparation Example 1 [wt%] | SBR [wt%] | CMC [wt%] | Carbon nanotubes [wt%] | Carbon nanoparticle s [wt%] |
|---|---|---|---|---|---|---|
| Example 1 | 96.975 | 1.0 | 2.0 | - | 0.025 | - |
| Example 2 | 96.95 | 1.0 | 2.0 | - | 0.05 | - |
| Example 3 | 96.90 | 1.0 | 2.0 | - | 0.1 | - |
| Example 4 | 96.80 | 1.0 | 2.0 | - | 0.2 | - |
| Example 5 | 96.60 | 1.0 | 2.0 | - | 0.4 | - |
| Example 6 | 96.95 | 0.5 | 2.0 | 0.5 | 0.05 | - |
| Example 7 | 96.90 | 0.5 | 2.0 | 0.5 | 0.1 | - |
| Example 8 | 96.80 | 0.5 | 2.0 | 0.5 | 0.2 | - |
| Example 9 | 96.90 | 1.0 | 2.0 | - | 0.75 | 0.25 |
| Comparative Example 1 | 97.0 | 1.0 | 2.0 | - | - | - |
| Comparative Example 2 | 97.0 | - | 2.0 | 1.0 | - | - |
| Comparative Example 3 | 96.975 | - | 2.0 | 1.0 | 0.025 | - |
| Comparative Example 4 | 96.95 | - | 2.0 | 1.0 | 0.05 | - |
| Comparative Example 5 | 96.90 | - | 2.0 | 1.0 | 0.1 | - |
| Comparative Example 6 | 96.80 | - | 2.0 | 1.0 | 0.2 | - |
| Comparative Example 7 | 96.60 | - | 2.0 | 1.0 | 0.4 | - |
| Comparative Example 8 | 95.0 | - | 2.0 | 1.0 | 2.0 | - |

**Evaluation Example 4: Evaluation of slurry solid and slurry dispersion stability**

The solid content (e.g., amount) and dispersion stability of a negative electrode active material prepared in a process of preparing the negative electrode of each of Examples 1 to 9 and Comparative Examples 1 to 8 were evaluated. Some of results thereof are shown in Table 2.

The solid content (e.g., amount) is a content (e.g., amount) of solids excluding distilled water from the negative electrode active material slurry.

The dispersion stability was evaluated according to a ratio of negative electrodes, in which aggregates of carbon nanotubes were observed on a surface of a negative electrode active material layer, to all negative electrodes after 20 negative electrodes were prepared for each of Examples and Comparative Examples.

◎ ratio of negative electrodes, in which aggregates of carbon nanotubes are observed, is 5 % or less

○ ratio of negative electrodes, in which aggregates of carbon nanotubes are observed, is 10 % or less

△ ratio of negative electrodes, in which aggregates of carbon nanotubes are observed, is 20 % or less

✕ ratio of negative electrodes, in which aggregates of carbon nanotubes are observed, is 50 % or less

**Evaluation Example 5: Evaluation of charge/discharge characteristics at high temperature (45 °C)**

The lithium batteries manufactured in Examples 1 to 9 and Comparative Examples 1 to 8 were charged at a constant current rate of 2 C at a temperature of 25 °C until a voltage reached 4.20 V (vs. Li). Subsequently, the lithium batteries were discharged at a constant current rate of 0.2 C until the voltage reached 2.8 V (vs. Li) during discharging (formation operation). The lithium batteries subjected to the formation operation were charged at a constant current rate of 1.0 C until the voltage reached 4.20 V (vs. Li). Subsequently, the lithium batteries were discharged at a constant current rate of 0.5 C until the voltage reached 2.8 V (vs. Li) during discharging (1st cycle).

Such a charging/discharging cycle was repeated 25 times. The lithium batteries were rested for 10 minutes after every charging/discharging cycle.

Some of charging/discharging test results are shown in Table 2. A capacity retention rate at a 25th cycle is defined by Equation 3.

Equation 3

$$\text{capacity retention rate} = [\text{discharge capacity at 25}^{\text{th}} \text{ cycle/discharge capacity at 1}^{\text{st}} \text{ cycle}] \times 100$$

**Evaluation Example 6: Measurement of initial electrode plate expansion ratio**

In a formation operation of a lithium battery assembled in Evaluation Example 5, after first charging/discharging was performed at a constant current rate of 0.1 C, the lithium battery was disassembled to measure a thickness of a negative electrode, and the measured thickness was referred to as a thickness of the negative electrode after charging/discharging.

A thickness of the negative electrode before assembly of the lithium battery was measured and referred to as a thickness of the negative electrode before assembly.

An initial electrode plate expansion ratio is represented by Equation 2.

Equation 2

$$\text{thickness expansion ratio (\%)} = [(\text{thickness of negative electrode after charging/discharging in formation operation} - \text{thickness of negative electrode before assembly})/\text{thickness of negative electrode before assembly}] \times 100$$

The initial electrode plate expansion rate of the negative electrode prepared in each of Examples 1 to 9 and Comparative Examples 1 to 8 was measured. Some of results thereof are shown in Table 2.

Table 2

|  | Slurry solid [wt%] | Dispersion stability | Initial electrode expansion ratio [%] | Capacity retention ratio [%] |
|---|---|---|---|---|
| Example 1 | 49 | ◎ | 17.4 | 90.0 |

(continued)

| | Slurry solid [wt%] | Dispersion stability | Initial electrode expansion ratio [%] | Capacity retention ratio [%] |
|---|---|---|---|---|
| Example 2 | 46 | ○ | 19.7 | 98.1 |
| Example 3 | 41 | Δ | 22.6 | 96.2 |
| Example 4 | 35 | Δ | 24.1 | 98.4 |
| Example 5 | 32 | Δ | 25.2 | 97.9 |
| Example 6 | 47 | ◎ | 20.7 | 97.9 |
| Example 7 | 45 | ○ | 22.5 | 98.0 |
| Example 8 | 41 | ○ | 23.1 | 97.8 |
| Comparative Example 1 | 52 | ○ | 16.1 | 81.5 |
| Comparative Example 2 | 49 | ◎ | 20.1 | 75.2 |
| Comparative Example 3 | 48 | ◎ | 21.4 | 85.2 |
| Comparative Example 4 | 45 | ○ | 22.1 | 87.4 |
| Comparative Example 5 | 42 | ○ | 24.4 | 90.3 |
| Comparative Example 6 | 38 | Δ | 25.5 | 94.1 |
| Comparative Example 7 | 38 | Δ | 27.0 | 97.2 |
| Comparative Example 8 | 38 | × | - | - |

As shown in Table 2, because the negative electrodes of Examples 1 to 8 each included an acrylic-based binder and a fibrous carbon-based conductive material at a constant ratio, lifespan characteristics were considerably improved as compared with the negative electrodes of Comparative Examples 1 to 4.

Because the negative electrode of Comparative Example 1 did not include a fibrous carbon-based conductive material, dispersion stability was high, but lifespan characteristics were degraded.

Because the negative electrode of Comparative Example 2 did not include an acrylic-based binder and a fibrous carbon-based conductive material, dispersion stability was high, but an initial electrode expansion ratio was increased and lifespan characteristics were degraded. Because the negative electrode of Comparative Example 2 did not include an acrylic-based binder, the internal resistance of the negative electrode was increased.

Because the negative electrodes of Comparative Examples 3 to 7 did not include an acrylic-based binder, an initial electrode expansion ratio was increased, and lifespan characteristics were degraded as compared with the negative electrodes of Examples 1 to 5 including acrylic-based binders in substantially the same content (e.g., amount). Because the negative electrodes of Comparative Examples 3 to 7 did not include an acrylic-based binder, the internal resistance of the negative electrodes were increased. The negative electrodes of Comparative Examples 3 to 7 may cause deterioration such as a rapid decrease in capacity of a lithium battery due to cracks of a negative electrode active material layer and/or delamination between the negative electrode active material layer and a current collector during long-term charging/discharging. A third repeating unit of the acrylic-based binder included in the negative electrodes of Examples 1 to 5 may include an ethylene oxide repeating unit connected to a main chain to provide additional lithium ion conductivity, thereby reducing the internal resistance of the negative electrode to thus improve the cycle characteristics of the lithium battery.

Because the dispersion stability of the negative electrode of Comparative Example 8 was considerably lowered, additional tests were not conducted.

Although not shown in Table 2, the negative electrode of Example 9 also showed a low initial electrode expansion ratio and excellent or suitable lifespan characteristics.

According to an aspect, by including an acrylic-based binder and a fibrous carbon-based conductive material, a volume change of a negative electrode including a metal-based negative electrode material may be suppressed or reduced, and the cycle characteristics of a lithium battery including such a negative electrode may be improved.

It should be understood that embodiments described herein should be considered in a descriptive sense only and not for purposes of limitation. Descriptions of features or aspects within each embodiment should typically be considered as available for other similar features or aspects in other embodiments. While one or more embodiments have been described with reference to the drawings, it will be understood by those of ordinary skill in the art that one or more suitable changes in form and details may be made therein without departing from the scope of the disclosure as defined by the following claims and equivalents thereof.

**Claims**

1. A negative electrode comprising:

   a negative electrode current collector; and
   a negative electrode active material layer on the negative electrode current collector,
   wherein the negative electrode active material layer comprises a negative electrode active material, a binder, and a carbon-based conductive material,
   the negative electrode active material comprises a metal-based negative electrode active material, the binder comprises an acrylic-based binder, the carbon-based conductive material comprises a fibrous carbon-based conductive material having an aspect ratio of 10 or more,
   the acrylic-based binder comprises a first repeating unit derived from a carboxyl group-containing monomer, a second repeating unit derived from a cyano group-containing monomer, and a third repeating unit derived from an alkylene oxide group-containing monomer, a sulfonic acid group-containing monomer, or a combination thereof,
   at least a portion of the first repeating unit comprises a metal carboxylate salt, and
   a weight ratio of the acrylic-based binder and the fibrous carbon-based conductive material is about 2:1 to about 40:1.

2. The negative electrode as claimed in claim 1, wherein the fibrous carbon-based conductive material comprises carbon nanotubes, and
   the carbon nanotubes comprise single-walled carbon nanotubes, double-walled carbon nanotubes, multi-walled carbon nanotubes, or a combination thereof and have an average length of about 40 micrometer ($\mu$m) to about 250 $\mu$m and an average diameter of about 1 nm to about 100 nm.

3. The negative electrode as claimed in claim 1 or claim 2, wherein an amount of the fibrous carbon-based conductive material is about 0.01 wt% to about 1.0 wt% with respect to a total weight of the negative electrode active material, the binder, and the carbon-based conductive material.

4. The negative electrode as claimed in any one of claims 1 to 3, wherein a loading level of the negative electrode active material layer is about 10 milligram per square centimeter (mg/cm$^2$) to about 30 mg/cm$^2$, and
   an amount of the fibrous carbon-based conductive material is about 0.01 wt% to about 0.3 wt% with respect to a total weight of the negative electrode active material, the binder, and the carbon-based conductive material.

5. The negative electrode as claimed in any one of claims 1 to 4, wherein the carbon-based conductive material further comprises a particulate carbon-based conductive material having an aspect ratio of 5 or less,

   the particulate carbon-based conductive material has an average particle diameter of 200 nanometer (nm) or less, and
   a weight ratio of the fibrous carbon-based conductive material and the particulate carbon-based conductive material is about 10:1 to about 1:10.

6. The negative electrode as claimed in any one of claims 1 to 5, wherein in the first repeating unit, an amount of a repeating unit comprising a metal carboxylate salt is about 30 mol% to about 80 mol%, and
   the metal carboxylate salt comprises a lithium salt, a sodium salt, a potassium salt, a rubidium salt, a cesium salt, or a combination thereof.

7. The negative electrode as claimed in any one of claims 1 to 6, wherein:

   (i) the carboxyl group-containing monomer comprises an unsaturated carboxylic acid, and
   the unsaturated carboxylic acid comprises a monocarboxylic acid, a dicarboxylic acid, a dicarboxylic acid anhydride, or a combination thereof or comprises an acrylic acid, a methacrylic acid, a crotonic acid, a maleic acid, a fumaric acid, an itaconic acid, or a combination thereof; and/or
   (ii) an amount of the first repeating unit derived from the carboxyl group-containing monomer is about 40 mol% to about 60 mol% with respect to all repeating units in the acrylic-based binder.

8. The negative electrode as claimed in any one of claims 1 to 7, wherein:

   (i) the cyano group-containing monomer comprises an unsaturated nitrile compound, and
   the unsaturated nitrile compound comprises acrylonitrile, methacrylonitrile, chloroacrylonitrile, ethylacrylonitrile, vinylidene cyanide, or a combination thereof; and/or
   (ii) an amount of the second repeating unit derived from the cyano group-containing monomer is about 40 mol% to about 70 mol% with respect to all repeating units in the acrylic-based binder.

9. The negative electrode as claimed in any one of claims 1 to 8, wherein the alkylene oxide group-containing monomer comprises an unsaturated carboxylic acid ester comprising 1 to 20 alkylene oxide repeating units,

   the alkylene oxide repeating units comprise a methylene oxide repeating unit, an ethylene oxide repeating unit, a propylene oxide repeating unit, or a combination thereof,
   the unsaturated carboxylic acid ester comprising the 1 to 20 alkylene oxide repeating units comprises polyethylene glycol methyl ether acrylate, polyethylene glycol methyl ether methacrylate, polyethylene glycol ethyl ether acrylate, polyethylene glycol ethyl ether methacrylate, or a combination thereof, and
   a weight average molecular weight of the alkylene oxide group-containing monomer is about 200 Dalton to about 950 Dalton.

10. The negative electrode as claimed in any one of claims 1 to 9, wherein:

    (i) the sulfonic acid group-containing monomer comprises at least one selected from among 2-acrylamido-2-methylpropanesulfonic acid, 2-methacrylamido-2-methylpropanesulfonic acid, 2-acrylamido-2-ethylpropanesulfonic acid, 2-methacrylamido-2-ethylpropanesulfonic acid, 2-acrylamido-2-methylbutanesulfonic acid, 2-methacrylamido-2-methylbutanesulfonic acid, 2-acrylamido-2-ethylbutanesulfonic acid, and 2-methacrylamido-2-ethylbutanesulfonic acid; and/or
    (ii) an amount of the third repeating unit is about 1 wt% to about 10 mol% with respect to all repeating units in the acrylic-based binder.

11. The negative electrode as claimed in any one of claims 1 to 10, wherein, in all repeating units in the acrylic-based binder, an amount of the first repeating unit derived from the carboxyl group-containing monomer is about 40 mol% to about 60 mol%, an amount of the second repeating unit derived from the cyano group-containing monomer is about 40 mol% to about 60 mol%, and an amount of the third repeating unit derived from the alkylene oxide group-containing monomer, a sulfonic acid group-containing monomer, or a combination thereof is about 1 mol% to about 10 mol%, and
    wherein a viscosity of a 5.5 wt% aqueous solution of the acrylic-based binder at a temperature of 25 °C and a pressure of 1 atm is about 1,500 centipoise to about 4,500 centipoise.

12. The negative electrode as claimed in any one of claims 1 to 11, wherein:

    (i) an amount of the acrylic-based binder is about 0.1 wt% to about 5 wt% with respect to a total weight of the negative electrode active material, the binder, and the carbon-based conductive material; and/or
    (ii) the binder further comprises a non-acrylic-based binder and comprises about 10 parts by weight to about 50 parts by weight of the acrylic-based binder with respect to about 100 parts by weight of the non-acrylic-based binder.

13. The negative electrode as claimed in any one of claims 1 to 12, wherein the metal-based negative electrode active material comprises silicon, a silicon alloy, silicon oxide, silicon nitride, silicon oxynitride, silicon carbide, a silicon-carbon composite, or a combination thereof,

the silicon-carbon composite comprises a composite of silicon nanoparticles, carbon nanoparticles, or a combination thereof,

the silicon-carbon composite has an average particle diameter of about 5 $\mu$m to about 20 $\mu$m,

the silicon nanoparticles have an average particle diameter of 200 nm or less, and

the carbon nanoparticles have an average particle diameter of 500 nm or less.

14. The negative electrode as claimed in any one of claims 1 to 13, wherein:

(i) the negative electrode active material further comprises a carbon-based negative electrode active material, and

a weight ratio of the metal-based negative electrode active material and the carbon-based negative electrode active material is about 5:95 to about 50:50; and/or

(ii) the negative electrode current collector comprises a base film and a metal layer, the base film comprises at least two surfaces and the metal layer is on at least one surface of the base film,

the base film comprises a polymer, the polymer comprises polyethylene terephthalate (PET), polyethylene (PE), polypropylene (PP), polybutylene terephthalate (PBT), polyimide (PI), or a combination thereof, and

the metal layer comprises indium (In), copper (Cu), magnesium (Mg), titanium (Ti), iron (Fe), cobalt (Co), nickel (Ni), zinc (Zn), aluminum (Al), germanium (Ge), lithium (Li), or an alloy thereof.

15. A lithium battery comprising:

a positive electrode;

the negative electrode as claimed in any one of claims 1 to 14; and

an electrolyte between the positive electrode and the negative electrode.

# FIG. 1

# FIG. 2

1a

5a

7a

2a
4a
3a

8a

# FIG. 3

1b

4b
2b
4b
3b

7b

8b

5b

Europäisches
Patentamt

European
Patent Office

Office européen
des brevets

## EUROPEAN SEARCH REPORT

**Application Number**

EP 24 16 4000

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 3 790 085 A1 (ARAKAWA CHEM IND [JP]) 10 March 2021 (2021-03-10) * the whole document * | 1-15 | INV. H01M4/62 H01M4/134 H01M4/38 |
| A | WO 2022/164244 A1 (LG ENERGY SOLUTION LTD [KR]) 4 August 2022 (2022-08-04) * the whole document * | 1-15 | H01M10/0525 H01M4/133 H01M4/36 H01M4/66 |
| | | | ADD. H01M4/02 |

**TECHNICAL FIELDS SEARCHED (IPC)**

H01M

The present search report has been drawn up for all claims

| Place of search | Date of completion of the search | Examiner |
|---|---|---|
| Munich | 25 July 2024 | Götz, Heide |

EPO FORM 1503 03.82 (P04C01)

**EP 4 439 734 A1**

**ANNEX TO THE EUROPEAN SEARCH REPORT**
**ON EUROPEAN PATENT APPLICATION NO.**  EP 24 16 4000

This annex lists the patent family members relating to the patent documents cited in  the above-mentioned European search report.
The members are as contained in the European Patent Office EDP file on
The European Patent Office is in no way liable for these particulars which are merely given for the purpose of information.

25-07-2024

| Patent document cited in search report | | Publication date | Patent family member(s) | | Publication date |
|---|---|---|---|---|---|
| EP 3790085 | A1 | 10-03-2021 | CN | 112447973 A | 05-03-2021 |
| | | | EP | 3790085 A1 | 10-03-2021 |
| | | | JP | 2021044238 A | 18-03-2021 |
| | | | KR | 20210029103 A | 15-03-2021 |
| | | | US | 2021075019 A1 | 11-03-2021 |
| WO 2022164244 | A1 | 04-08-2022 | CN | 116670850 A | 29-08-2023 |
| | | | EP | 4261936 A1 | 18-10-2023 |
| | | | JP | 2024503357 A | 25-01-2024 |
| | | | KR | 20220109700 A | 05-08-2022 |
| | | | US | 2024088366 A1 | 14-03-2024 |
| | | | WO | 2022164244 A1 | 04-08-2022 |

EPO FORM P0459

For more details about this annex : see Official Journal of the European Patent Office, No. 12/82